(19) Europäisches Patentamt
European Patent Office
Office européen des brevets

(11) EP 3 375 841 A1

(12) EUROPEAN PATENT APPLICATION

(43) Date of publication:
**19.09.2018 Bulletin 2018/38**

(21) Application number: **17161354.0**

(22) Date of filing: **16.03.2017**

(51) Int Cl.:
***C09K 19/04*** *(2006.01)*
***C09K 19/34*** *(2006.01)*
***C09K 19/30*** *(2006.01)*
***C09K 19/12*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Merck Patent GmbH**
**64293 Darmstadt (DE)**

(72) Inventor: **The designation of the inventor has not yet been filed**

(54) **LIQUID-CRYSTALLINE MEDIUM**

(57) The present invention relates to liquid-crystal media comprising
a) one or more compounds of the formula IA,

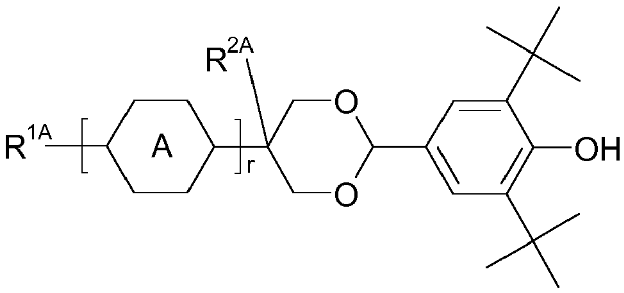

IA

and
b) one or more compounds of the formula II

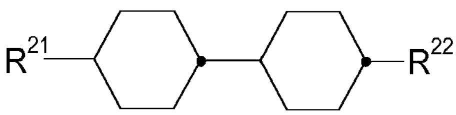

II

and
c) one or more compounds selected from the group of the compounds of the formulae III-1 to III-4,

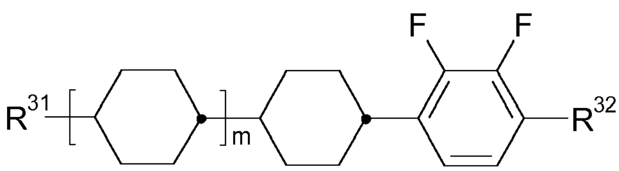

III-1

EP 3 375 841 A1

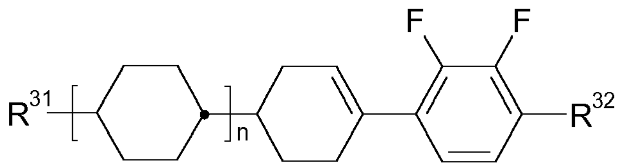

III-2

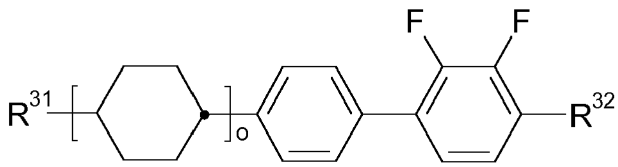

III-3

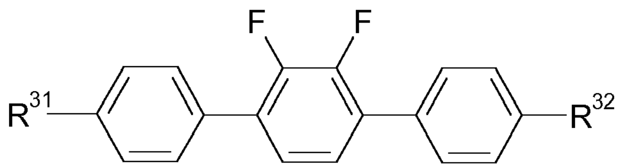

III-4

in which the parameters have the meanings indicated in claim 1, to the use thereof in an electro-optical display, particularly in an active-matrix display based on the VA, ECB, FFS or IPS effect, and to displays of this type which contain a liquid-crystalline medium according to the invention.

## Description

The present invention relates to liquid-crystal media and to the use thereof in liquid-crystal displays, and to these liquid-crystal displays, particularly liquid-crystal displays which use the ECB (electrically controlled birefringence) effect or IPS (in-plane switching) displays or FFS (fringe field switching) displays with dielectrically negative liquid crystals.

The majority of liquid crystal displays (LC displays) used at present are usually those of the TN ("twisted nematic") type. However, these have the disadvantage of a strong viewing-angle dependence of the contrast.

In addition, so-called VA ("vertically aligned") displays are known which have a broader viewing angle. The LC cell of a VA display contains a layer of an LC medium between two transparent electrodes, where the LC medium has a negative value of the dielectric anisotropy ($\Delta\varepsilon$). In the switched-off state, the molecules of the LC layer are aligned perpendicular to the electrode surfaces (homeotropically) or have a tilted homeotropic alignment. On application of a voltage to the two electrodes, a re-alignment of the LC molecules parallel to the electrode surfaces takes place.

Also known are so-called IPS ("in-plane switching") displays, which contain an LC layer between two substrates with planar orientation, where the two electrodes are arranged on only one of the two substrates and preferably have interdigitated, comb-shaped structures. On application of a voltage to the electrodes an electric field with a significant component parallel to the LC layer is generated between them. This causes realignment of the LC molecules in the layer plane.

Furthermore, so-called FFS ("fringe-field switching") displays have been reported (see, inter alia, S.H. Jung et al., Jpn. J. Appl. Phys., Volume 43, No. 3, 2004, 1028), which contain two electrodes on the same substrate, one of which is structured in a comb-shaped manner and the other is unstructured. A strong, so-called "fringe field" is thereby generated, i.e. a strong electric field close to the edge of the electrodes, and, throughout the cell, an electric field which has both a strong vertical component and also a strong horizontal component. FFS displays have a low viewing-angle dependence of the contrast. FFS displays usually contain an LC medium with positive dielectric anisotropy, and an alignment layer, usually of polyimide, which provides planar alignment to the molecules of the LC medium.

FFS displays can be operated as active-matrix or passive-matrix displays. In the case of active-matrix displays, individual pixels are usually addressed by integrated, non-linear active elements, such as, for example, transistors (for example thin-film transistors ("TFTs")), while in the case of passive-matrix displays, individual pixels are usually addressed by the multiplex method, as known from the prior art.

Furthermore, FFS displays have been disclosed (see S.H. Lee et al., Appl. Phys. Lett. 73(20), 1998, 2882-2883 and S.H. Lee et al., Liquid Crystals 39(9), 2012, 1141-1148), which have similar electrode design and layer thickness as FFS displays, but comprise a layer of an LC medium with negative dielectric anisotropy instead of an LC medium with positive dielectric anisotropy. The LC medium with negative dielectric anisotropy shows a more favourable director orientation that has less tilt and more twist orientation compared to the LC medium with positive dielectric anisotropy, as a result of which these displays have a higher transmission.

However, the use of LC media with negative dielectric anisotropy in FFS displays has also several drawbacks. For example, they have a significantly lower reliability compared to LC media with positive dielectric anisotropy.

The term "reliability" as used herein means the quality of the performance of the display during time and with different stress loads, such as light load, temperature, humidity, or voltage which cause display defects such as image sticking (area and line image sticking), mura, yogore etc. and which are known to the skilled person in the field of LC displays. As a standard parameter for categorising the reliability usually the voltage holding ration (VHR) value is used, which is a measure for maintaining a constant electrical voltage in a test display. The higher the VHR value, the better the reliability of the medium.

The reduced reliability of an LC medium with negative dielectric anisotropy in an FFS display can be explained by an interaction of the LC molecules with the polyimide of the alignment layer, as a result of which ions are extracted from the polyimide alignment layer, and wherein LC molecules with negative dielectric anisotropy do more effectively extract such ions.

This results in new requirements for LC media to be used in FFS displays. In particular, the LC medium has to show a high reliability and a high VHR value after UV exposure. Further requirements are a high specific resistance, a large working-temperature range, short response times even at low temperatures, a low threshold voltage, a multiplicity of grey levels, high contrast and a broad viewing angle, and reduced image sticking.

Thus, in displays known from prior art often the undesired effect of so-called "image sticking" or "image burn" is observed, wherein the image produced in the LC display by temporary addressing of individual pixels still remains visible even after the electric field in these pixels has been switched off, or after other pixels have been addressed.

This "image sticking" can occur on the one hand if LC media having a low VHR are used. The UV component of daylight or the backlighting can cause undesired decomposition reactions of the LC molecules therein and thus initiate the production of ionic or free-radical impurities. These may accumulate, in particular, at the electrodes or the alignment layers, where they may reduce the effective applied voltage.

Another problem observed in prior art is that LC media for use in displays, including but not limited to FFS

displays, do often exhibit high viscosities and, as a consequence, high switching times. In order to reduce the viscosity and switching time of the LC medium, it has been suggested in prior art to add LC compounds with an alkenyl group. However, it was observed that LC media containing alkenyl compounds often show a decrease of the reliability and stability, and a decrease of the VHR especially after exposure to UV radiation but also to visible light from the backlight of a display, that usually does not emit UV light.

In order to reduce the decrease of the reliability and stability, the use of stabilisers was proposed, such as for example compounds of the HALS-(hindered amine light stabiliser) type, as disclosed in e.g. EP 2 514 800 B1 and WO 2009/129911 A1. A typical example is Tinuvin 770, a compound of the formula

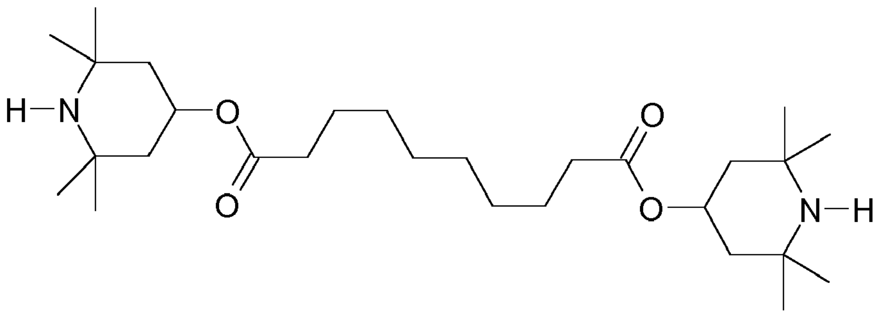

.

Nevertheless, these LC mixtures can still exhibit insufficient reliability during the operation of a display, e.g. upon irradiation with the typical CCFL-(Cold Cathode Fluorescent Lamp) backlight.

A different class of compound used for the stabilisation of liquid crystals are antioxidants derived from phenol, such as for example the compound

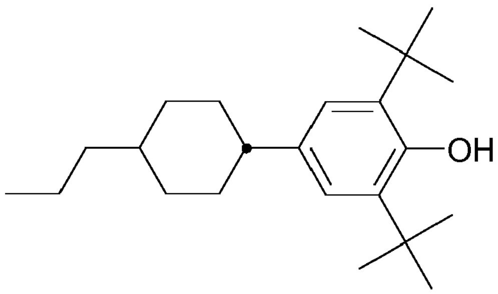

as described in DE 19539141 A1. Such stabilisers can be used to stabilise LC mixtures against heat or the influence of oxygen but typically do not show advantages under light stress.

Furthermore, liquid-crystalline media with negative dielectric anisotropy comprising one or more stabilisers are described e.g. in WO 2016/146245 A1.

Because of the complex modes of action of the different kinds of stabilisers and minute effects in a display, where the liquid crystal, a complex mixture of many different types of compounds itself, interacts with different kinds of species, including the polyimide, it is a challenging task to choose the right stabiliser and to identify the best material combination. Hence, there is still great demand for new kinds of stabilisers with different properties in order to broaden the range of applicable materials.

It is therefore an object of the present invention to provide improved LC media for use in VA-, IPS- or FFS displays, which do not exhibit the disadvantages described above or only do so to a small extent and have improved properties. A further object of the invention is to provide FFS displays with good transmission, high reliability, a high VHR value especially after backlight exposure, a relatively high specific resistance, a large working-temperature range, short response times even at low temperatures, a low threshold voltage, a multiplicity of grey levels, high contrast and a broad viewing angle, and reduced image sticking.

This object was achieved according to the present invention by providing LC mixtures for the use in VA-, IPS- or FFS displays as described and claimed hereinafter. In particular it was found that the above objects can be achieved by using an LC medium comprising a stabiliser, preferably a combination of stabilisers as described hereinafter, and comprising one or more alkenyl compounds, in a VA-, IPS or FFS display. It has also been found that when using stabilisers according to the invention in an LC medium for use in an FFS display, surprisingly the reliability and the VHR value after backlight load or UV load are higher, and the resistivity is sufficiently high for display applications but lower

compared to an LC medium without a stabiliser according to the present invention.

Also, the use of an LC medium comprising a stabiliser as described hereinafter allows to exploit the known advantages of alkenyl-containing LC media, like reduced viscosity and faster switching time, and at the same time leads to improved reliability and high VHR value especially after backlight exposure.

In particular, surprisingly, it is possible to obtain fast response times of LC mixtures at the same time as good reliability through the use of the compounds of the formula II indicated below, if suitable stabilisers are added. A reliability parameter which can be specifically influenced here is the voltage holding ratio after exposure to light, such as, for example, exposure to UV light (sun test) or exposure by the backlight of an LCD. The use of stabilisers of this type increases the voltage holding ratio after exposure to light.

The invention relates to a liquid-crystalline medium which comprises

a) one or more compounds of the formula IA,

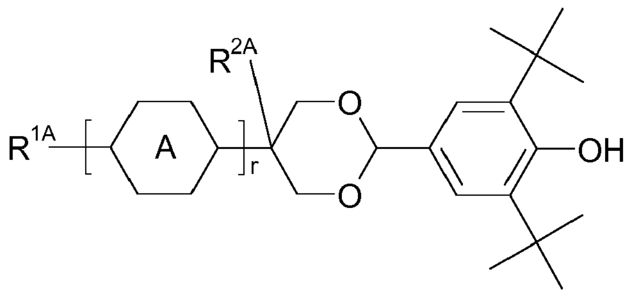

IA

wherein

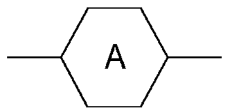

denotes

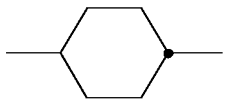

,

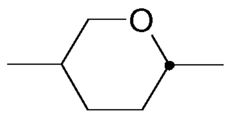

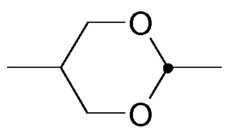

or

$R^{1A}$ denotes H, an alkyl, alkenyl or alkoxy radical having up to 15 C atoms, in which one or more H atoms may be replaced by halogen,

$R^{2A}$ denotes H, alkyl or alkenyl or alkoxy having up to 7 C atoms, in which one or more H atoms may be replaced by halogen,

r is 0 or 1;

and

b) one or more compounds of the formula II

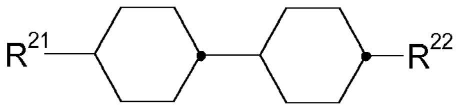

II

in which

$R^{21}$ denotes an unsubstituted alkyl radical having 1 to 7 C atoms or an unsubstituted alkenyl radical having 2 to 7 C atoms, and

$R^{22}$ denotes an unsubstituted alkenyl radical having 2 to 7 C atoms,

and

c) one or more compounds selected from the group of the compounds of the formulae III-1 to III-4,

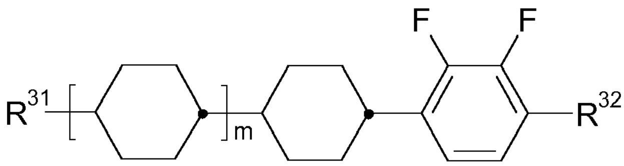

III-1

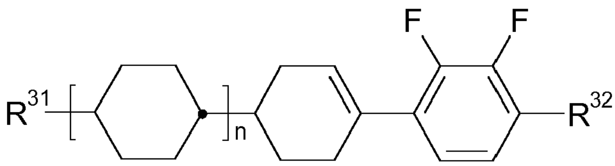

III-2

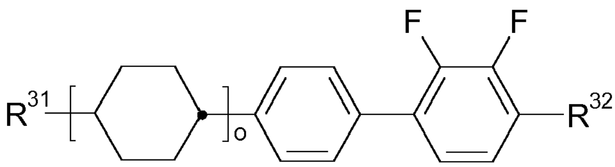

III-3

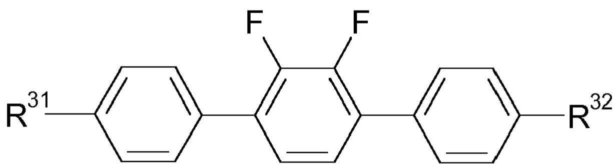

III-4

in which

$R^{31}$ denotes an unsubstituted alkyl radical having 1 to 7 C atoms,

$R^{32}$ denotes an unsubstituted alkyl radical having 1 to 7 C atoms or an unsubstituted alkoxy radical having 1 to 6 C atoms, and

m, n and o each, independently of one another, are 0 or 1.

The mixtures according to the invention preferably exhibit very broad nematic phase ranges with clearing points ≥ 70°C, preferably ≥ 75°C, in particular ≥ 80°C, very favourable values of the capacitive threshold, relatively high values of the holding ratio and at the same time very good low-temperature stabilities at -20°C and -30°C, as well as very low rotational viscosity values and short response times. The mixtures according to the invention are furthermore distinguished by the fact that, in addition to the improvement in the rotational viscosity $\gamma_1$, relatively high values of the elastic constants $K_{33}$ for improving the response times can be observed. By the use of the compounds of the formula II in LC mixtures that preferably have negative dielectric anisotropy, the ratio of rotational viscosity $\gamma_1$ and elastic constants $K_i$

is reduced. At the same time, the media according to the invention show advantageously high reliability, in particular long term reliability after heat and/or light stress and in particular high VHR after heat and/or light stress in combination with no image sticking or at least a lower degree of image sticking sufficiently low for the operation of a display, compared to media without one or more compounds of formula IA.

In the present application, the elements all include their respective isotopes. In particular, one or more H in the compounds may be replaced by D, and this is also particularly preferred in some embodiments. A correspondingly high degree of deuteration of the corresponding compounds enables, for example, detection and recognition of the compounds. This is very helpful in some cases, in particular in the case of the compounds of the formula IA or IB.

In the present application, light stress means exposure to light in the visible or UV-A range of the magnetic spectrum or both.

In the present application,

alkyl particularly preferably denotes straight-chain alkyl, in particular $CH_3$-, $C_2H_5$-, *n*-$C_3H_7$-, *n*-$C_4H_9$- or *n*-$C_5H_{11}$-, and

alkenyl particularly preferably denotes $CH_2$=CH-, *E*-$CH_3$-CH=CH-, $CH_2$=CH-$CH_2$-$CH_2$-, *E*-$CH_3$-CH=CH-$CH_2$-$CH_2$- or *E*-(*n*-$C_3H_7$)-CH=CH-, and

alkoxy preferably denotes straight chain alkoxy having 1 to 15 C atoms, in particularly preferably methoxy, ethoxy, n-propoxy, n-butoxy, n-pentyloxy and n-hexyloxy.

Preferred compounds of the formula IA are the compounds selected from the group of compounds of the formulae IA-1 and IA-2, particularly preferred from the compounds of the formula IA-1:

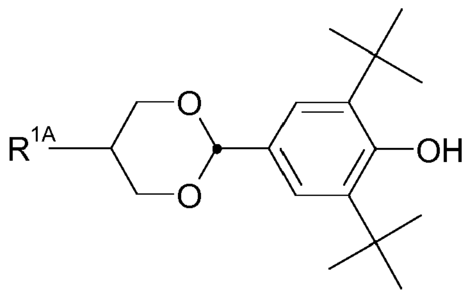

IA-1

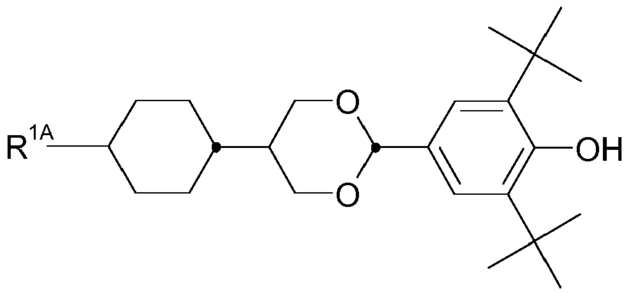

IA-2

wherein

$R^{1A}$ has the meaning given above and preferably denotes alkyl having 1 to 7 C atoms, particularly preferably ethyl, n-propyl, n-butyl or n-pentyl.

The medium according to the invention preferably comprises one or more compounds of formula IA-1, preferably selected from the group of compounds of the formulae IA-1a to IA-1 e

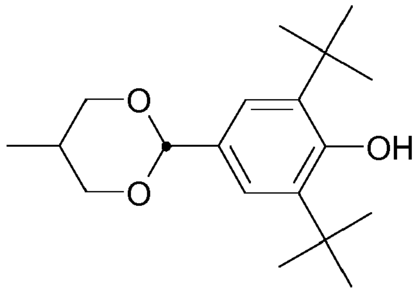

IA-1a

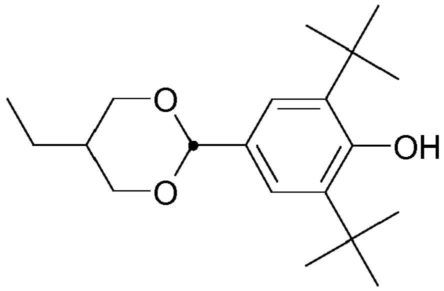

IA-1b

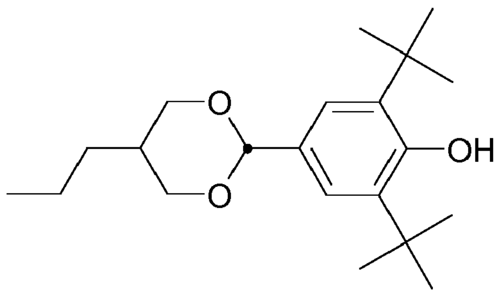

IA-1c

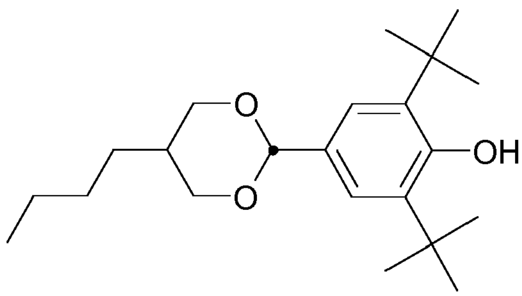

IA-1d

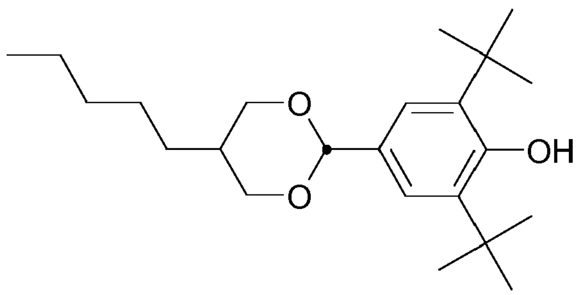

IA-1e

Preferred compounds of the formula II are the compounds selected from the group of the compounds of the formulae II-1 and II-2, preferably selected from the compounds of the formula II-1,

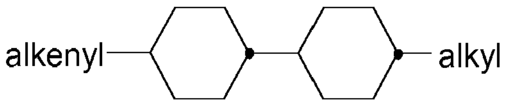

II-1

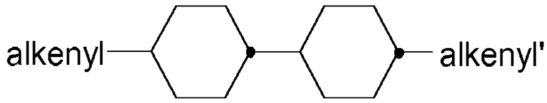

II-2

in which

alkyl denotes an alkyl radical having 1 to 7 C atoms, preferably having 2 to 5 C atoms,

alkenyl denotes an alkenyl radical having 2 to 5 C atoms, preferably having 2 to 4 C atoms, particularly preferably 2 C atoms,

alkenyl' denotes an alkenyl radical having 2 to 5 C atoms, preferably having 2 to 4 C atoms, particularly preferably having 2 to 3 C atoms.

The media according to the invention preferably comprise one or more compounds of the formula III-1, preferably one or more compounds selected from the group of the compounds of the formulae III-1-1 and III-1-2,

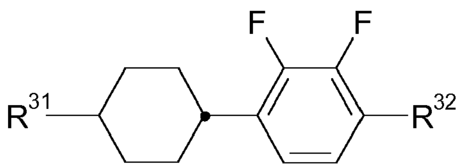

III-1-1

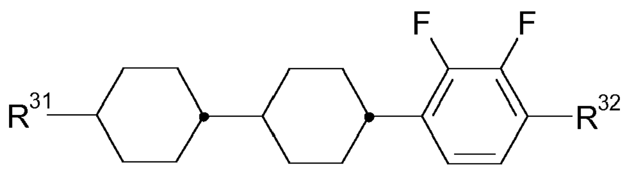

III-1-2

in which the parameters have the meanings given above for formula III-1, and preferably

$R^{31}$ denotes an alkyl radical having 2 to 5 C atoms, preferably having 3 to 5 C atoms, and

$R^{32}$ denotes an alkyl or alkoxy radical having 2 to 5 C atoms, preferably an alkoxy radical having 2 to 4 C atoms, or an alkenyloxy radical having 2 to 4 C atoms.

The media according to the invention preferably comprise one or more compounds of the formula III-2, preferably one or more compounds selected from the group of the compounds of the formulae III-2-1 and III-2-2,

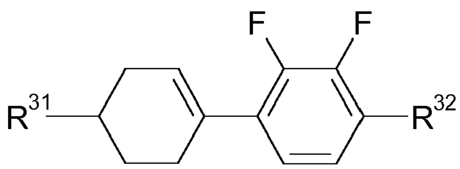

III-2-1

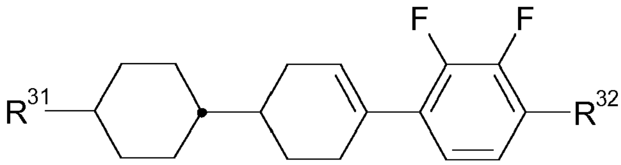

III-2-2

in which the parameters have the meanings given above for formula III-2, and preferably

$R^{31}$ denotes an alkyl radical having 2 to 5 C atoms, preferably having 3 to 5 C atoms, and

$R^{32}$ denotes an alkyl or alkoxy radical having 2 to 5 C atoms, preferably an alkoxy radical having 2 to 4 C atoms, or an alkenyloxy radical having 2 to 4 C atoms.

The media according to the invention preferably comprise one or more compounds of the formula III-3, preferably one or more compounds selected from the group of the compounds of the formulae III-3-1 and III-3-2,

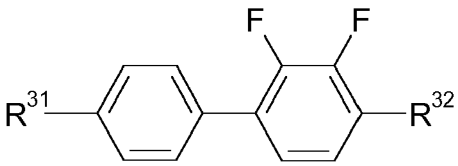

III-3-1

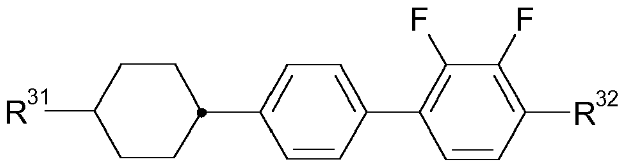

III-3-2

in which the parameters have the meanings given above for formula III-3, and preferably

$R^{31}$ denotes an alkyl radical having 2 to 5 C atoms, preferably having 3 to 5 C atoms, and

$R^{32}$ denotes an alkyl or alkoxy radical having 2 to 5 C atoms, preferably an alkoxy radical having 2 to 4 C atoms, or an alkenyloxy radical having 2 to 4 C atoms.

In a preferred embodiment, the media according to the invention comprise one or more compounds of the formula II selected from the group of the compounds of the formulae II-1 and II-2.

In a preferred embodiment of the present invention the liquid-crystalline medium comprises one or more compounds selected from compounds of the formula IB

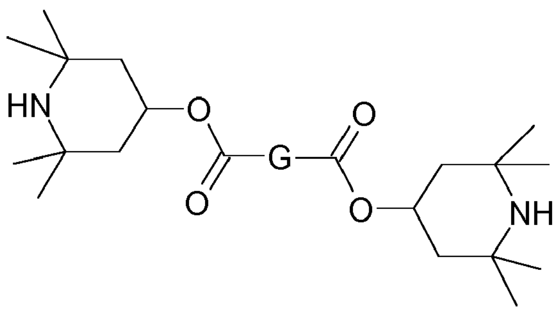

IB

wherein

G denotes a single bond or a divalent aliphatic or cycloaliphatic radical having 1 to 20 C atoms.

Examples of the group G are methylene, ethylene or polymethylene having up to 20 carbon atoms; or the alkylene radical is interrupted by one or two hetero atoms, such as the bivalent radicals $-CH_2OCH_2-$, $-CH_2CH_2OCH_2CH_2-$, $-CH_2CH_2OCH_2CH_2OCH_2CH_2-$, $-CH_2C(O)OCH_2CH_2O(O)CCH_2-$, $-CH_2CH_2C(O)OCH_2CH_2O(O)CCH_2CH_2-$, $-CH_2CH_2-C(O)O(CH_2)_4O(O)C-CH_2CH_2-$,$-CH_2CH_2O(O)C(CH_2)_4C(O)OCH_2CH_2-$ and $-CH_2CH_2O(O)C(CH_2)_8C(O)OCH_2CH_2-$.

G can also be arylene-bis-alkylene, e.g. p-xylylene, benzene-1,3-bis(ethylene), biphenyl-4,4' -bis(methylene) or naphthalene-1,4-bis(methylene).

It can, finally, be alkenylene or alkynylene having 4 to 8 carbon atoms, such as 2-butenylene-1,4, 2-butynylene-1,4 or 2,4-hexadiynylene-1,6.

Preferably, the compounds of formula IB are selected from the compounds of the formula IB-1

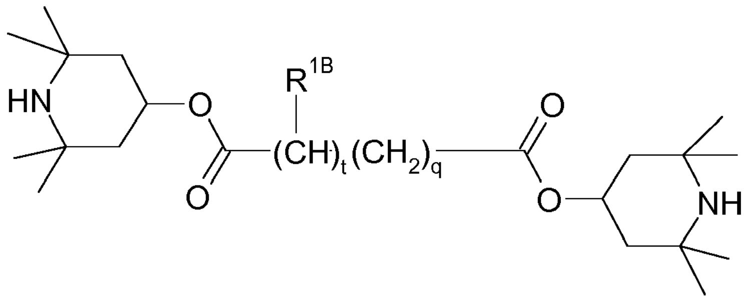

IB-1

wherein

$R^{1B}$ denotes H or alkyl having 1 to 6 C atoms, preferably H or ethyl;

t is 0 or 1, and

q is 0, 1, 2, 3, 4, 5, 6, 7, 8, or 9.

Particularly preferably, the compounds of formula IB-1 are selected from the compounds of the formula IB-1 a and IB-1 b

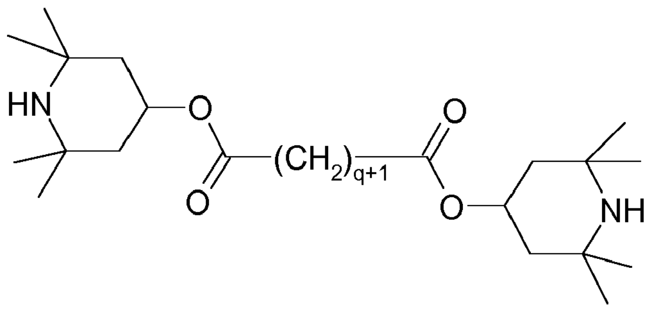

IB-1a

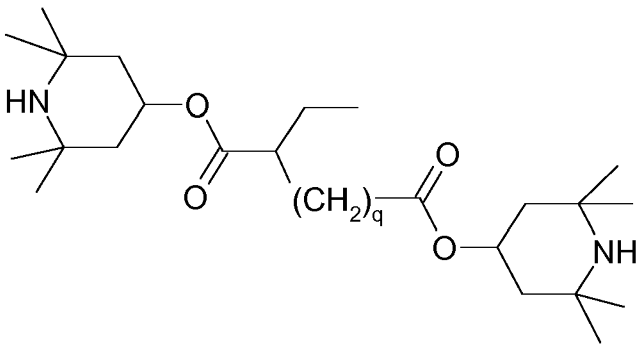

IB-1b

wherein q is 0, 1, 2, 3, 4, 5, 6, 7, 8, or 9, preferably 6, 7 or 8, particularly preferably 7.

In a preferred embodiment, the liquid-crystalline medium according to the invention additionally comprises one or more compounds of the formula ST

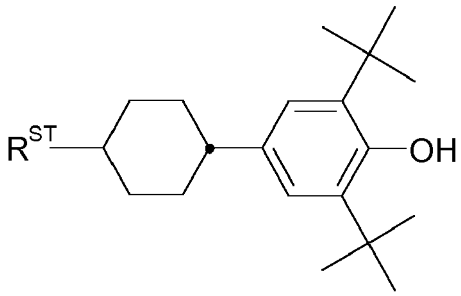

ST

wherein

$R^{ST}$ denotes alkyl having 1 to 7 C atoms.

The present invention also relates to electro-optical displays or electro-optical components which contain liquid-crystalline media according to the invention. Preference is given to electro-optical displays which are based on the VA or ECB effect, to IPS and to FFS displays and in particular those which are addressed by means of an active-matrix addressing device.

Accordingly, the present invention likewise relates to the use of a liquid-crystalline medium according to the invention in an electro-optical display or in an electro-optical component, and to a process for the preparation of the liquid-crystalline media according to the invention, characterised in that one or more compounds of the formula IA are mixed with one or more compounds of the formula II, preferably with one or more compounds of the sub-formula II-1, and one or more further compounds, preferably selected from the group of the compounds of the formulae III-1 to III-4 and IV and/or V.

In addition, the present invention relates to a process for the stabilisation of a liquid-crystalline medium which comprises one or more compounds of the formula II and one or more compounds selected from the group of the compounds of the formulae III-1 to III-4, characterised in that one or more compounds of the formula IA and optionally one or more compounds of the formula IB are added to the medium.

In a further preferred embodiment, the medium comprises one or more compounds of the formula IV

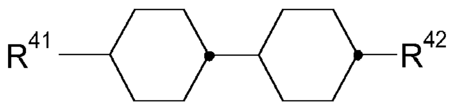

IV

in which

$R^{41}$ denotes alkyl having 1 to 7 C atoms, preferably having 2 to 5 C atoms, and

$R^{42}$ denotes alkyl having 1 to 7 C atoms or alkoxy having 1 to 6 C atoms, preferably having 2 to 5 C atoms.

In a further preferred embodiment, the medium comprises one or more compounds of the formula IV, selected from the group of the compounds of the formulae IV-1 and IV-2,

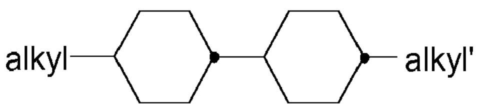

IV-1

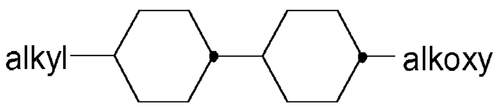

IV-2

in which

alkyl and alkyl', independently of one another, denote alkyl having 1 to 7 C atoms, preferably having 2 to 5 C atoms, and

alkoxy denotes alkoxy having 1 to 5 C atoms, preferably having 2 to 4 C atoms.

In a further preferred embodiment, the medium comprises one or more compounds of the formula V

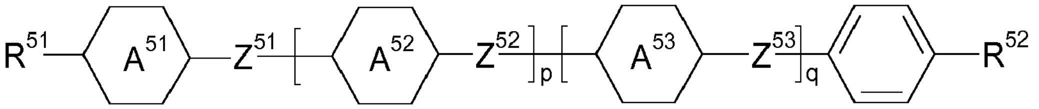 V

in which

$R^{51}$ and $R^{52}$, independently of one another, have one of the meanings given for $R^{21}$ and $R^{22}$ and preferably denote alkyl having 1 to 7 C atoms, preferably *n*-alkyl, particularly preferably *n*-alkyl having 1 to 5 C atoms, alkoxy having 1 to 7 C atoms, preferably *n*-alkoxy, particularly preferably *n*-alkoxy having 2 to 5 C atoms, alkoxyalkyl, alkenyl or alkenyloxy having 2 to 7 C atoms, preferably having 2 to 4 C atoms, preferably alkenyloxy,

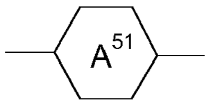

to

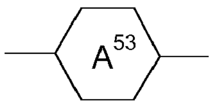 ,

if present, each, independently of one another, denote

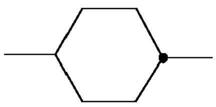 , 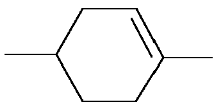 , 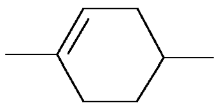 ,

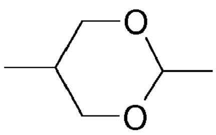 , 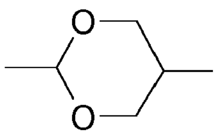 , 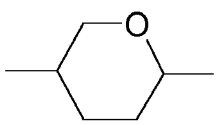 ,

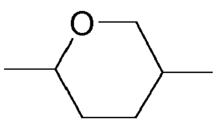 , 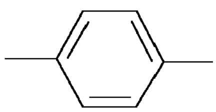 , 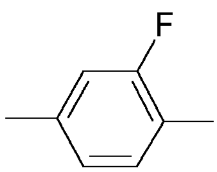 ,

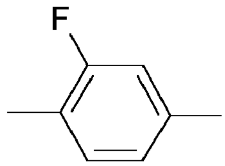

,

or preferably

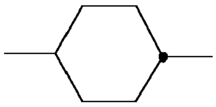 , 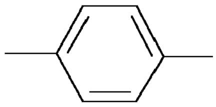 , 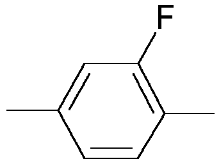 ,

or

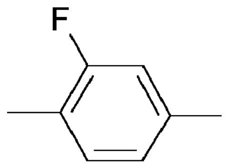

,

preferably

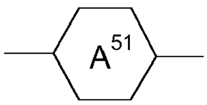

denotes

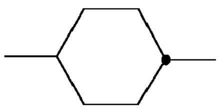

,

and, if present,

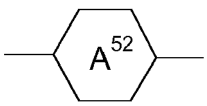

preferably denotes

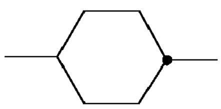

,

$Z^{51}$ to $Z^{53}$ each, independently of one another, denote $-CH_2-CH_2-$, $-CH_2-O-$, -CH=CH-, -C=C-, -COO- or a single bond, preferably $-CH_2-CH_2-$, $-CH_2-O-$ or a single bond and particularly preferably a single bond,

p and q each, independently of one another, denote 0 or 1,

(p + q) preferably denotes 0 or 1.

In a further preferred embodiment, the medium comprises one or more compounds of the formula V selected from the group of the compounds of the formulae V-1 to V-10, preferably selected from the group of the compounds of the formulae V-1 to V-5,

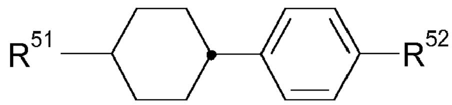
V-1

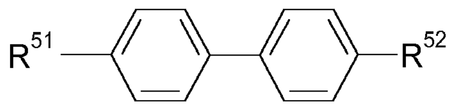
V-2

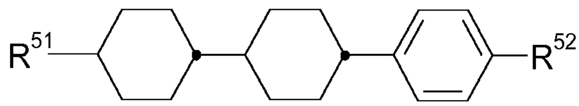
V-3

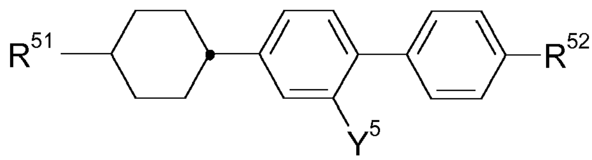
V-4

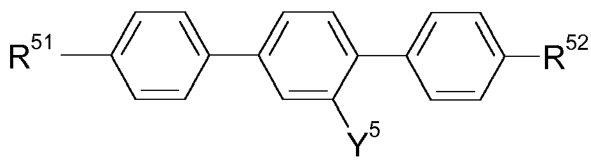
V-5

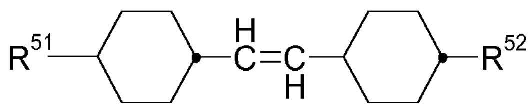
V-6

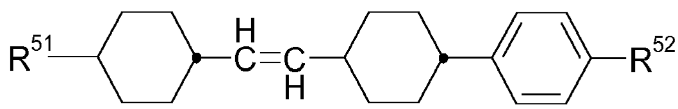
V-7

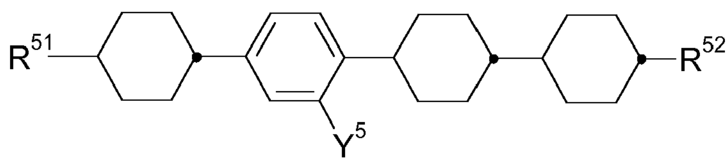
V-8

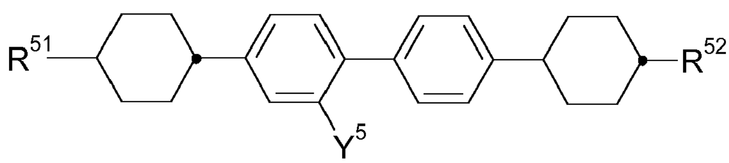
V-9

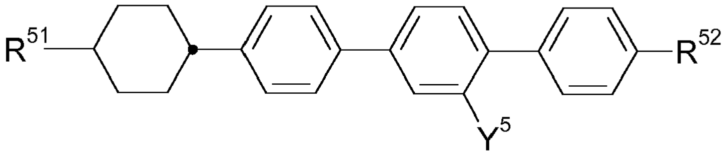

V-10

in which the parameters have the meanings given above under formula V, and

$Y^5$ denotes H or F, and preferably
$R^{51}$ denotes alkyl having 1 to 7 C atoms or alkenyl having 2 to 7 C atoms, and
$R^{52}$ denotes alkyl having 1 to 7 C atoms, alkenyl having 2 to 7 C atoms or alkoxy having 1 to 6 C atoms, preferably alkyl or alkenyl, particularly preferably alkenyl.

In a further preferred embodiment, the medium comprises one or more compounds of the formula V-1 selected from the group of the compounds of the formulae V-1 a and V-1 b, preferably of the formula V-1 b,

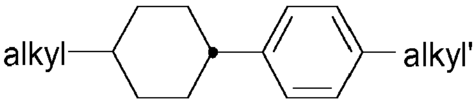

V-1a

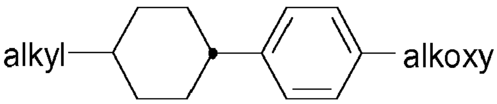

V-1b

in which

alkyl and alkyl', independently of one another, denote alkyl having 1 to 7 C atoms, preferably having 2 to 5 C atoms,

alkoxy denotes alkoxy having 1 to 5 C atoms, preferably having 2 to 4 C atoms.

In a further preferred embodiment, the medium comprises one or more compounds of the formula V-3 selected from the group of the compounds of the formulae V-3a and V-3b,

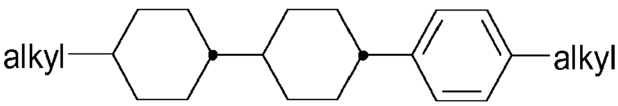

V-3a

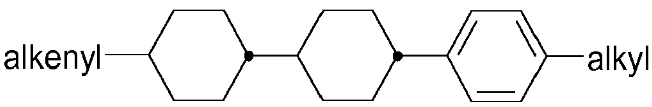

V-3b

in which

alkyl and alkyl', independently of one another, denote alkyl having 1 to 7 C atoms, preferably having 2 to 5 C atoms,

alkoxy denotes alkoxy having 1 to 5 C atoms, preferably having 2 to 4 C atoms, and

alkenyl denotes alkenyl having 2 to 7 C atoms, preferably having 2 to 5 C atoms.

In a further preferred embodiment, the medium comprises one or more compounds of the formula V-4 selected from the group of the compounds of the formulae V-4a and V-4b,

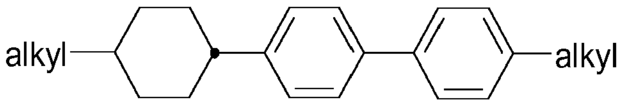

V-4a

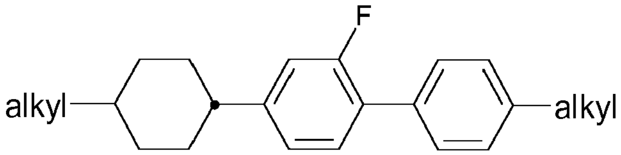

V-4b

in which

alkyl and alkyl', independently of one another, denote alkyl having 1 to 7 C atoms, preferably having 2 to 5 C atoms,

alkoxy denotes alkoxy having 1 to 5 C atoms, preferably having 2 to 4 C atoms, and

alkenyl denotes alkenyl having 2 to 7 C atoms, preferably having 2 to 5 C atoms.

In a further preferred embodiment, the medium comprises one or more compounds of the formula III-4, preferably of the formula III-4-a,

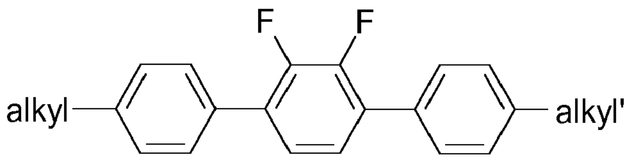

III-4-a

in which

alkyl and alkyl', independently of one another, denote alkyl having 1 to 7 C atoms, preferably having 2 to 5 C atoms.

The liquid-crystal media in accordance with the present invention may comprise one or more chiral compounds.

The liquid-crystalline media according to the present application preferably comprise in total 1 ppm to 2000 ppm, preferably 10 ppm to 1500 ppm, even more preferably 100 to 1000 ppm and very particularly preferably 250 ppm to 750 ppm, of compounds of the formula IA.

In addition to the compounds of the formula IA or preferred sub-formulae thereof, the media according to the present invention preferably comprise one or more dielectrically neutral compounds of the formula II in a total concentration in the range from 5% or more to 90% or less, preferably from 10% or more to 80% or less, particularly preferably from 20% or more to 70% or less.

The medium according to the invention preferably comprises one or more compounds selected from the group of the formulae III-1 to III-4 in a total concentration in the range of from 10% or more to 80% or less, preferably from 15% or more to 70% or less, particularly preferably from 20% or more to 60% or less.

In a preferred embodiment of the present invention the medium comprises one or more compounds of formula IB in a total concentration in the range of from 10 ppm to 3000 ppm, preferably 200 ppm to 2000 ppm, more preferably 500 ppm to 1500 ppm and particularly preferably 800 ppm to 1200 ppm.

The medium according to the invention particularly preferably comprises one or more compounds of formula IA and one or more compounds of formula IB in an total concentration in the range of from 20 ppm to 5000 ppm, preferably 250 ppm to 3000 ppm, more preferably 750 to 2000 ppm and particularly preferably 1300 to 1700 ppm.

The medium according to the invention particularly preferably comprises

- one or more compounds of the formula III-1 in a total concentration in the range from 5% or more to 30% or less,
- one or more compounds of the formula III-2 in a total concentration in the range from 3% or more to 30% or less,
- one or more compounds of the formula III-3 in a total concentration in the range from 5% or more to 30% or less,
- one or more compounds of the formula III-4 in a total concentration in the range from 1 % or more to 30% or less.

The media according to the invention preferably comprise the following compounds in the total concentrations stated:

10 - 60% by weight of one or more compounds of the formula III and/or

30 - 80% by weight of one or more compounds of the formulae IV and/or V,

where the total content of all compounds in the medium is 100%.

Particularly preferred embodiments of the present invention meet one or more of the following conditions, where the acronyms (abbreviations) are explained in Tables A to C and illustrated by examples in Table D.

i. The liquid-crystalline medium has a birefringence of 0.060 or more, particularly preferably 0.070 or more.

ii. The liquid-crystalline medium has a birefringence of 0.130 or less, particularly preferably 0.120 or less.

iii. The liquid-crystalline medium has a birefringence in the range of from 0.065 to 0.130, particularly preferably in the range of from 0.080 to 0.120 and very particularly preferably from 0.085 to 0.110.

iv. The liquid-crystalline medium has a negative dielectric anisotropy having an absolute value of 2.0 or more, particularly preferably 3.0 or more.

v. The liquid-crystalline medium has a negative dielectric anisotropy having an absolute value of 5.5 or less, particularly preferably 4.0 or less.

vi. The liquid-crystal mixture according to the invention has a dielectric anisotropy ($\Delta\varepsilon$) in the range of from -0.5 to -8.0, in particular -1.5 to -6.0, and very particularly preferably -2.0 to -5.0.

vii. The rotational viscosity $\gamma_1$ is preferably 120 mPa·s or less, in particular 100 mPa·s or less

viii. The liquid-crystalline medium comprises one or more particularly preferred compounds of the formula II selected from the sub-formulae given below:

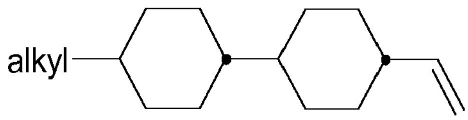

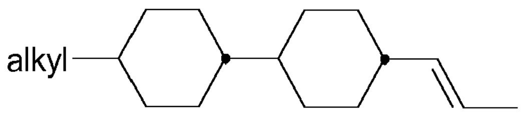

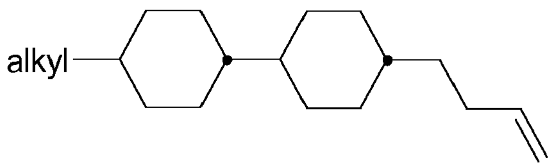

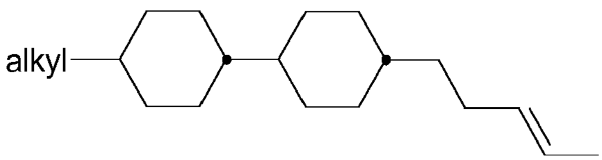

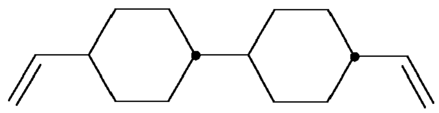

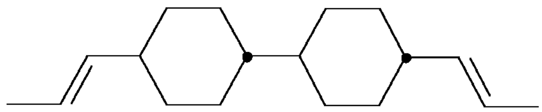

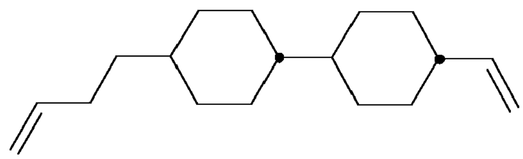

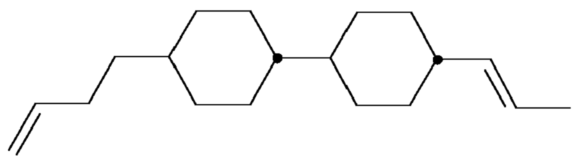

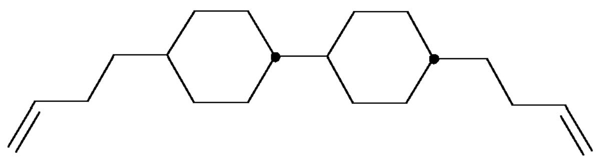

in which alkyl has the meaning given above and preferably, in each case independently of one another, denotes alkyl having 1 to 6, preferably having 2 to 5, C atoms and particularly preferably *n*-alkyl.

ix. The total concentration of the compounds of the formula II in the mixture as a whole is 25% or more, preferably 30% or more, and is preferably in the range from 25% or more to 49% or less, particularly preferably in the range from 29% or more to 47% or less, and very particularly preferably in the range from 37% or more to 44% or less.

x. The liquid-crystalline medium comprises one or more compounds of the formula II selected from the group of the compounds of the following formulae: CC-n-V and/or CC-n-Vm, particularly preferably CC-3-V, preferably in a concentration of up to 50% or less, particularly preferably up to 42% or less, and optionally additionally CC-3-V1, preferably in a concentration of up to 15% or less, and/or CC-4-V, preferably in a concentration of up to 20% or less, particularly preferably up to 10% or less.

xi. The total concentration of the compounds of the formula CC-3-V in the mixture as a whole is 20% or more, preferably 25% or more.

xii. The proportion of compounds of the formulae III-1 to III-4 in the mixture as a whole is 50% or more and preferably 75% or less.

xiii. The liquid-crystalline medium essentially consists of compounds of the formulae IA, II, III-1 to III-4, IV and V, preferably of compounds of the formulae IA, II and III-1 to III-4.

xiv. The liquid-crystalline medium comprises one or more compounds of the formula IV, preferably in a total concentration of 5% or more, in particular 10% or more, and very particularly preferably 15% or more to 40% or less.

The invention furthermore relates to an electro-optical display having active-matrix addressing based on the VA or ECB effect, or of the IPS or FFS effect, characterised in that it contains, as dielectric, a liquid-crystalline medium in accordance with the present invention.

The liquid-crystal mixture preferably has a nematic phase range having a width of at least 80 degrees and a flow viscosity $v_{20}$ of at most 30 $mm^2 \cdot s^{-1}$ at 20°C.

The mixtures according to the invention are suitable for all VA-TFT applications, such as, for example, VAN, MVA, (S)-PVA and ASV. They are furthermore suitable for IPS (in-plane switching), FFS (fringe-field switching) and PALC applications having negative Δε.

The nematic liquid-crystal mixtures in the displays according to the invention generally comprise two components A and B, which themselves consist of one or more individual compounds.

The liquid-crystalline media according to the invention preferably comprise 4 to 15, in particular 5 to 12, and particularly preferably 10 or less, compounds. These are preferably selected from the group of the compounds of the formulae I, II and III-1 to III-4, and/or IV and/or V.

The liquid-crystalline media according to the invention may optionally also comprise more than 18 compounds. In this case, they preferably comprise 18 to 25 compounds.

Besides compounds of the formulae I to V, other constituents may also be present, for example in an amount of up to 45%, but preferably up to 35%, in particular up to 10%, of the mixture as a whole.

The media according to the invention may optionally also comprise a dielectrically positive component, whose total concentration is preferably 10% or less, based on the entire medium.

In a preferred embodiment, the liquid-crystal media according to the invention comprise in total, based on the mixture as a whole,

10 ppm or more to 1000 ppm or less, preferably 50 ppm or more to 500 ppm or less, particularly preferably 100 ppm or more to 400 ppm or less and very particularly preferably 150 ppm or more to 300 ppm or less, of the compound of the formula IA,

20% or more to 60% or less, preferably 25% or more to 50% or less, particularly preferably 30% or more to 45% or less, of compounds of the formula II, and

50% or more to 70% or less of compounds of the formulae III-1 to III-4.

In a preferred embodiment, the liquid-crystal media according to the invention comprise compounds selected from the group of the compounds of the formulae IA, IB, II, III-1 to III-4, IV and V, preferably selected from the group of the compounds of the formulae IA-1, IB-1, II and III-1 to III-4; they preferably consist predominantly, particularly preferably essentially and very particularly preferably virtually completely of the compounds of the said formulae. Particularly preferably, the media comprise one or more compounds of formula IA-1 and one or more compounds of formula IB-1a, or one or more compounds of formula IA-1 and one or more compounds of formula IB-1 b, or one or more compounds of formula IA-1 and one or more compounds of formula IB-1a and one or more compounds of formula IB-1 b.

The liquid-crystal media according to the invention preferably have a nematic phase from in each case at least -20°C or less to 70°C or more, particularly preferably from -30°C or less to 80°C or more, very particularly preferably from -40°C or less to 85°C or more and most preferably from -40°C or less to 90°C or more.

The expression "have a nematic phase" here means on the one hand that no smectic phase and no crystallisation are observed at low temperatures at the corresponding temperature and on the other hand that no clearing occurs on heating out of the nematic phase. The investigation at low temperatures is carried out in a flow viscometer at the corresponding temperature and checked by storage in test cells having a cell thickness corresponding to the electro-optical application for at least 100 hours. If the storage stability at a temperature of -20°C in a corresponding test cell is 1000 h or more, the medium is regarded as stable at this temperature. At temperatures of -30°C and -40°C, the corresponding times are 500 h and 250 h respectively. At high temperatures, the clearing point is measured in capillaries by conventional methods.

In addition, the liquid-crystal media according to the invention have high values for the VHR in liquid-crystal cells.

In freshly filled cells at 20°C in the cells, these are greater than or equal to 95%, preferably greater than or equal to 97%, particularly preferably greater than or equal to 98% and very particularly preferably greater than or equal to 99%, and after 5 minutes in the oven at 100°C in the cells, these are greater than or equal to 90%, preferably greater than or equal to 93%, particularly preferably greater than or equal to 96% and very particularly preferably greater than or equal to 98%.

In general, liquid-crystal media having a low addressing voltage or threshold voltage here have a lower VHR than those having a higher addressing voltage or threshold voltage, and vice versa.

These preferred values for the individual physical properties are preferably also in each case maintained by the media according to the invention in combination with one another.

In the present application, the term "compounds", also written as "compound(s)", means both one and also a plurality of compounds, unless explicitly indicated otherwise.

Unless indicated otherwise, the individual compounds are generally employed in the mixtures in concentrations in each case from 1% or more to 30% or less, preferably from 2% or more to 30% or less and particularly preferably

from 3% or more to 16% or less.

In a preferred embodiment, the liquid-crystalline media according to the invention comprise

the compound of the formula IA,

one or more compounds of the formula II, preferably selected from the group of the compounds of the formulae CC-n-V and CC-n-Vm, preferably CC-3-V, CC-3-V1, CC-4-V and CC-5-V, particularly preferably selected from the group of the compounds CC-3-V, CC-3-V1 and CC-4-V, very particularly preferably the compound CC-3-V, and optionally additionally the compound(s) CC-4-V and/or CC-3-V1,

one or more compounds of the formula III-1-1, preferably of the formula CY-n-Om, selected from the group of the compounds of the formulae CY-3-O2, CY-3-O4, CY-5-O2 and CY-5-O4,

one or more compounds of the formula III-1-2, preferably selected from the group of the compounds of the formulae CCY-n-m and CCY-n-Om, preferably of the formula CCY-n-Om, preferably selected from the group of the compounds of the formulae CCY-3-O2, CCY-2-O2, CCY-3-O1, CCY-3-O3, CCY-4-O2, CCY-3-O2 and CCY-5-O2,

optionally, preferably obligatorily, one or more compounds of the formula III-2-2, preferably of the formula CLY-n-Om, preferably selected from the group of the compounds of the formulae CLY-2-O4, CLY-3-O2, CLY-3-O3,

one or more compounds of the formula III-3-2, preferably of the formula CPY-n-Om, preferably selected from the group of the compounds of the formulae CPY-2-O2 and CPY-3-O2, CPY-4-O2 and CPY-5-O2,

one or more compounds of the formula III-4, preferably of the formula PYP-n-m, preferably selected from the group of the compounds of the formulae PYP-2-3 and PYP-2-4.

For the present invention, the following definitions apply in connection with the specification of the constituents of the compositions, unless indicated otherwise in individual cases:

- "comprise": the concentration of the constituents in question in the composition is preferably 5% or more, particularly preferably 10% or more, very particularly preferably 20% or more,

- "predominantly consist of": the concentration of the constituents in question in the composition is preferably 50% or more, particularly preferably 55% or more and very particularly preferably 60% or more,

- "essentially consist of": the concentration of the constituents in question in the composition is preferably 80% or more, particularly preferably 90% or more and very particularly preferably 95% or more, and

- "virtually completely consist of": the concentration of the constituents in question in the composition is preferably 98% or more, particularly preferably 99% or more and very particularly preferably 100.0%.

This applies both to the media as compositions with their constituents, which can be components and compounds, and also to the components with their constituents, the compounds. Only in relation to the concentration of an individual compound relative to the medium as a whole does the term comprise mean: the concentration of the compound in question is preferably 1% or more, particularly preferably 2% or more, very particularly preferably 4% or more.

For the present invention, "≤" means less than or equal to, preferably less than, and "≥" means greater than or equal to, preferably greater than.

For the present invention,

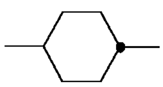
,
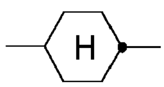
and
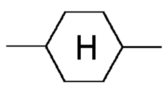

denote trans-1,4-cyclohexylene, and

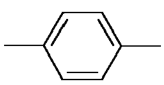
and
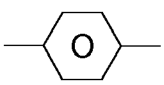

denote 1,4-phenylene.

For the present invention, the expression "dielectrically positive compounds" means compounds having a $\Delta\varepsilon$ of > 1.5, the expression "dielectrically neutral compounds" means those where $-1.5 \leq \Delta\varepsilon \leq 1.5$ and the expression "dielectrically negative compounds" means those where $\Delta\varepsilon < -1.5$. The dielectric anisotropy of the compounds is determined here by dissolving 10% of the compounds in a liquid-crystalline host and determining the capacitance of the

resultant mixture in each case in at least one test cell having a cell thickness of 20 μm with homeotropic and with homogeneous surface alignment at 1 kHz. The measurement voltage is typically 0.5 V to 1.0 V, but is always lower than the capacitive threshold of the respective liquid-crystal mixture investigated.

The host mixture used for dielectrically positive and dielectrically neutral compounds is ZLI-4792 and that used for dielectrically negative compounds is ZLI-2857, both from Merck KGaA, Germany. The values for the respective compounds to be investigated are obtained from the change in the dielectric constant of the host mixture after addition of the compound to be investigated and extrapolation to 100% of the compound employed. The compound to be investigated is dissolved in the host mixture in an amount of 10%. If the solubility of the substance is too low for this purpose, the concentration is halved in steps until the investigation can be carried out at the desired temperature.

The liquid-crystal media according to the invention may, if necessary, also comprise further additives, such as, for example, stabilisers and/or pleochroic dyes and/or chiral dopants in the usual amounts. The amount of these additives employed is preferably in total 0% or more to 10% or less, based on the amount of the entire mixture, particularly preferably 0.1% or more to 6% or less. The concentration of the individual compounds employed is preferably 0.1% or more to 3% or less. The concentration of these and similar additives is generally not taken into account when specifying the concentrations and concentration ranges of the liquid-crystal compounds in the liquid-crystal media.

In a preferred embodiment, the liquid-crystal media according to the invention comprise a polymer precursor which comprises one or more reactive compounds, preferably reactive mesogens, and, if necessary, also further additives, such as, for example, polymerisation initiators and/or polymerisation moderators, in the usual amounts. The amount of these additives employed is in total 0% or more to 10% or less, based on the amount of the entire mixture, preferably 0.1% or more to 2% or less. The concentration of these and similar additives is not taken into account when specifying the concentrations and concentration ranges of the liquid-crystal compounds in the liquid-crystal media.

The compositions consist of a plurality of compounds, preferably 3 or more to 30 or fewer, particularly preferably 6 or more to 20 or fewer and very particularly preferably 10 or more to 16 or fewer compounds, which are mixed in a conventional manner. In general, the desired amount of the components used in lesser amount is dissolved in the components making up the principal constituent of the mixture. This is advantageously carried out at elevated temperature. If the selected temperature is above the clearing point of the principal constituent, completion of the dissolution operation is particularly easy to observe. However, it is also possible to prepare the liquid-crystal mixtures in other conventional ways, for example using pre-mixes or from a so-called "multi bottle system".

The mixtures according to the invention exhibit very broad nematic phase ranges having clearing points of 65°C or more, very favourable values for the capacitive threshold, relatively high values for the holding ratio and at the same time very good low-temperature stabilities at -30°C and -40°C. Furthermore, the mixtures according to the invention are distinguished by low rotational viscosities $\gamma_1$.

It goes without saying to the person skilled in the art that the media according to the invention for use in VA, IPS, FFS or PALC displays may also comprise compounds in which, for example, H, N, O, Cl, F have been replaced by the corresponding isotopes.

The structure of the liquid-crystal displays according to the invention corresponds to the usual geometry, as described, for example, in EP-A 0 240 379.

The liquid-crystal phases according to the invention can be modified by means of suitable additives in such a way that they can be employed in any type of, for example, ECB, VAN, IPS, FFS, GH or ASM-VA LCD display that has been disclosed to date.

Table E below indicates possible dopants which can be added to the mixtures according to the invention. If the mixtures comprise one or more dopants, it is (they are) employed in amounts of 0.01 to 4%, preferably 0.1 to 1.0%.

Stabilisers which can be added, for example, to the mixtures according to the invention, preferably in amounts of 0.01 to 6%, in particular 0.1 to 3%, are shown below in Table F.

For the purposes of the present invention, all concentrations are, unless explicitly noted otherwise, indicated in per cent by weight and relate to the corresponding mixture or mixture component, unless explicitly indicated otherwise.

All temperature values indicated in the present application, such as, for example, the melting point T(C,N), the smectic (S) to nematic (N) phase transition T(S,N) and the clearing point T(N,I), are indicated in degrees Celsius (°C) and all temperature differences are correspondingly indicated in differential degrees (° or degrees), unless explicitly indicated otherwise.

For the present invention, the term "threshold voltage" relates to the capacitive threshold ($V_0$), also known as the Freedericks threshold, unless explicitly indicated otherwise.

All physical properties are and have been determined in accordance with "Merck Liquid Crystals, Physical Properties of Liquid Crystals", status Nov. 1997, Merck KGaA, Germany, and apply for a temperature of 20°C, and $\Delta n$ is determined at 589 nm and $\Delta\varepsilon$ at 1 kHz, unless explicitly indicated otherwise in each case.

The electro-optical properties, for example the threshold voltage ($V_0$) (capacitive measurement), are, as is the switching behaviour, determined in test cells produced at Merck Japan. The measurement cells have soda-lime glass substrates and are constructed in an ECB or VA configuration with polyimide alignment layers (SE-1211 with diluent,

(mixing ratio 1:1), both from Nissan Chemicals, Japan), which have been rubbed perpendicularly to one another and effect homeotropic alignment of the liquid crystals. The surface area of the transparent, virtually square ITO electrodes is 1cm$^2$.

Unless indicated otherwise, a chiral dopant is not added to the liquid-crystal mixtures used, but the latter are also particularly suitable for applications in which doping of this type is necessary.

The VHR is determined in test cells produced at Merck Japan. The measurement cells have soda-lime glass substrates and are constructed with polyimide alignment layers (AL-3046 from Japan Synthetic Rubber, Japan) with a layer thickness of 50 nm, which have been rubbed perpendicularly to one another. The layer thickness is a uniform 6.0 $\mu$m. The surface area of the transparent ITO electrodes is 1 cm$^2$. The VHR is then determined at 20°C ($VHR_{20}$) and after 5 minutes in an oven at 100°C ($VHR_{100}$) in the commercially available measurement system Model 6254 from Toyo Corporation, Japan. The voltage used has a frequency of 60 Hz.

Similar test cells are used for the ion density measurements but using AL16301 polyimide (Japan Synthetic Rubber, Japan).

The ion density is measured using the commercially available LC Material Characteristics Measurement System Model 6254 from Toyo Corporation, Japan. From the ion density, the conductivity is calculated.

The accuracy of the VHR measurement values depends on the respective value of the VHR. The accuracy decreases with decreasing values. The deviations generally observed in the case of values in the various magnitude ranges are compiled in their order of magnitude in the following table.

| VHR range | | Deviation (relative) |
|---|---|---|
| VHR values | | $\Delta_G$VHR/VHR/% |
| from | to | Approx. |
| 99.6% | 100% | +/- 0.1 |
| 99.0% | 99.6% | +/- 0.2 |
| 98% | 99% | +/- 0.3 |
| 95% | 98% | +/- 0.5 |
| 90% | 95% | +/- 1 |
| 80% | 90% | +/- 2 |
| 60% | 80% | +/- 4 |
| 40% | 60% | +/- 8 |
| 20% | 40% | +/- 10 |
| 10% | 20% | +/- 20 |

The stability to UV irradiation is investigated in a "Suntest CPS", a commercial instrument from Heraeus, Germany. The sealed test cells are irradiated for 2.0 hours without additional heating. The irradiation power in the wavelength range from 300 nm to 800 nm is 765 W/m$^2$ V. A UV "cut-off" filter having an edge wavelength of 310 nm is used in order to simulate the so-called window glass mode. In each series of experiments, at least four test cells are investigated for each condition, and the respective results are indicated as averages of the corresponding individual measurements.

The decrease in the voltage holding ratio ($\Delta$VHR) usually caused by the exposure, for example by UV irradiation by LCD backlighting, is determined in accordance with the following equation (1):

$$\Delta VHR(t) = VHR(t) - VHR(t=0) \qquad (1).$$

The relative stability ($S_{rel}$) of an LC mixture to a load for a time t is determined in accordance with the following equation, equation (2):

$$S_{rel}(t) = \frac{VHRref(t=0) - VHRref(t)}{VHR(t=0) - VHR(t)} \qquad (2),$$

where "ref" stands for the corresponding unstabilised mixture.

The rotational viscosity is determined using the rotating permanent magnet method and the flow viscosity in a modified Ubbelohde viscometer. For liquid-crystal mixtures ZLI-2293, ZLI-4792 and MLC-6608, all products from Merck KGaA, Darmstadt, Germany, the rotational viscosity values determined at 20°C are 161 mPa·s, 133 mPa·s and 186 mPa·s respectively, and the flow viscosity values (v) are 21 $mm^2 \cdot s^{-1}$, 14 $mm^2 \cdot s^{-1}$ and 27 $mm^2 \cdot s^{-1}$ respectively.

The following symbols are used, unless explicitly indicated otherwise:

| | |
|---|---|
| $V_0$ | threshold voltage, capacitive [V] at 20°C, |
| $n_e$ | extraordinary refractive index measured at 20°C and 589 nm, |
| $n_o$ | ordinary refractive index measured at 20°C and 589 nm, |
| $\Delta n$ | optical anisotropy measured at 20°C and 589 nm, |
| $\varepsilon_{\perp}$ | dielectric susceptibility perpendicular to the director at 20°C and 1 kHz, |
| $\varepsilon_{\|\|}$ | dielectric susceptibility parallel to the director at 20°C and 1 kHz, |
| $\Delta\varepsilon$ | dielectric anisotropy at 20°C and 1 kHz, |
| cl.p. or $T_{(N,I)}$ | clearing point [°C], |
| $\nu$ | flow viscosity measured at 20°C [$mm^2.s^{-1}$], |
| $\gamma_1$ | rotational viscosity measured at 20°C [mPa·s], |
| $K_1$ | elastic constant, "splay" deformation at 20°C [pN], |
| $K_2$ | elastic constant, "twist" deformation at 20°C [pN], |
| $K_3$ | elastic constant, "bend" deformation at 20°C [pN], and |
| LTS | low-temperature stability of the phase, determined in test cells, |
| VHR | voltage holding ratio, |
| $\Delta$VHR | decrease in the voltage holding ratio, |
| $S_{rel}$ | relative stability of the VHR. |

The following examples explain the present invention without limiting it. However, they show the person skilled in the art preferred mixture concepts with compounds preferably to be employed and the respective concentrations thereof and combinations thereof with one another. In addition, the examples illustrate the properties and property combinations that are accessible.

For the present invention and in the following examples, the structures of the liquid-crystal compounds are indicated by means of acronyms, with the transformation into chemical formulae taking place in accordance with Tables A to C below. All radicals $C_nH_{2n+1}$, $C_mH_{2m+1}$ and $C_lH_{2l+1}$ or $C_nH_{2n}$, $C_mH_{2m}$ and $C_lH_{2l}$ are straight-chain alkyl radicals or alkylene radicals, in each case having n, m and l C atoms respectively. Table A shows the codes for the ring elements of the nuclei of the compound, Table B lists the bridging units, and Table C lists the meanings of the symbols for the left- and right-hand end groups of the molecules. The acronyms are composed of the codes for the ring elements with optional linking groups, followed by a first hyphen and the codes for the left-hand end group, and a second hyphen and the codes for the right-hand end group. Table D shows illustrative structures of compounds together with their respective abbreviations.

**Table A: Ring elements**

| | | | |
|---|---|---|---|
| **C** | 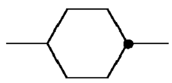 | | |
| **D** | 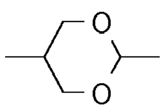 | **DI** | 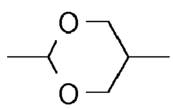 |
| **A** | 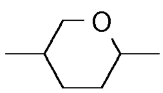 | **AI** | 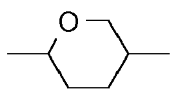 |
| **P** | 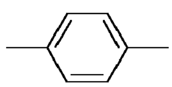 | | |
| **G** | 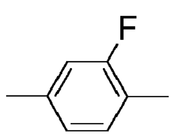 | **GI** | 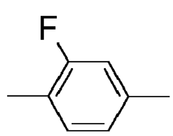 |

(continued)

| | | | |
|---|---|---|---|
| **U** | 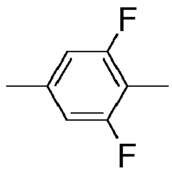 | **UI** | 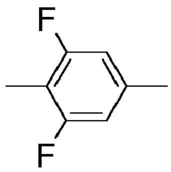 |
| **Y** | 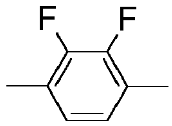 | | |
| **P(F, Cl)Y** | 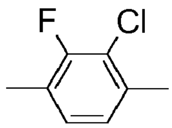 | **P(Cl,F)Y** | 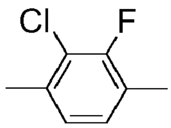 |
| **np** | 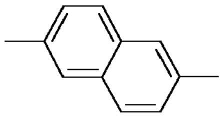 | | |
| **n3f** | 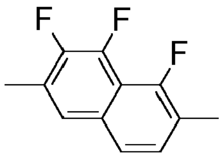 | **nN3fl** | 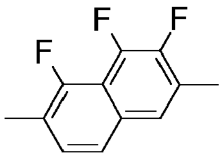 |
| **th** | 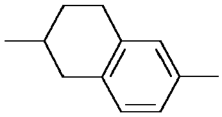 | **thl** | 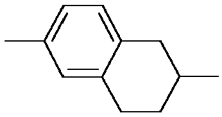 |
| **tH2f** | 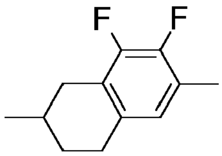 | **tH2fl** | 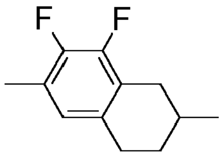 |
| **o2f** | 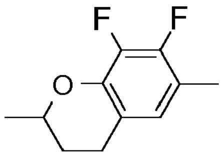 | **o2fl** | 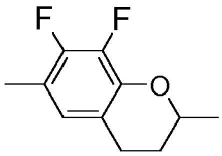 |
| **dh** | 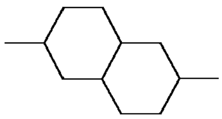 | | |
| **K** | 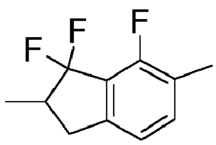 | **KI** | 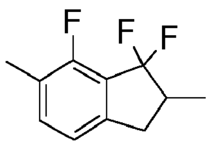 |
| **L** | 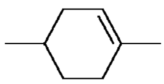 | **LI** | 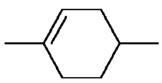 |

(continued)

| | | | |
|---|---|---|---|
| **F** | 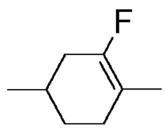 | **FI** | 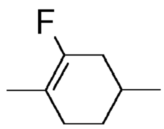 |

**Table B: Bridging units**

| | | | |
|---|---|---|---|
| **E** | $-CH_2-CH_2-$ | | |
| **V** | -CH=CH- | | |
| **T** | -C≡C- | | |
| **W** | $-CF_2-CF_2-$ | | |
| **B** | -CF=CF- | | |
| **Z** | -CO-O- | **ZI** | -O-CO- |
| **X** | -CF=CH- | **XI** | -CH=CF- |
| **O** | $-CH_2-O-$ | **OI** | $-O-CH_2-$ |
| **Q** | $-CF_2-O-$ | **QI** | $-O-CF_2-$ |

**Table C: End groups**

| On the left individually or in combination | | On the right individually or in combination | |
|---|---|---|---|
| **-n-** | $C_nH_{2n+1}-$ | **-n** | $-C_nH_{2n+1}$ |
| **-nO-** | $C_nH2_{n+1}$-O- | **-nO** | $-O-C_nH_{2n+1}$ |
| **-V-** | $CH_2$=CH- | **-V** | $-CH=CH_2$ |
| **-nV-** | $C_nH_{2n+1}$-CH=CH- | **-nV** | $-C_nH_{2n}-CH=CH_2$ |
| **-Vn-** | $CH_2=CH-C_nH_{2n}-$ | **-Vn** | $-CH=CH-C_nH_{2n+1}$ |
| **-nVm-** | $C_nH_{2n+1}-CH=CH-C_mH_{2m}-$ | **-nVm** | $-C_nH_{2n}-CH=CH-C_mH_{2m+1}$ |
| **-N-** | N≡C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | $CFH_2$- | **-M** | $-CFH_2$ |
| **-D-** | $CF_2$H- | **-D** | $-CF_2H$ |
| **-T-** | $CF_3$- | **-T** | $-CF_3$ |
| **-MO-** | $CFH_2O$- | **-OM** | $-OCFH_2$ |
| **-DO-** | $CF_2HO$- | **-OD** | $-OCF_2H$ |
| **-TO-** | $CF_3O$ - | **-OT** | $-OCF_3$ |
| **-A-** | H-C≡C- | **-A** | -C≡C-H |
| **-nA-** | $C_nH_{2n-1}$-C≡C- | **-An** | -C≡C-$C_nH_{2n+1}$ |
| **-NA-** | N≡C-C≡C- | **-AN** | -C≡C-C≡N |

| On the left only in combination | | On the right only in combination | |
|---|---|---|---|
| -...**n**...- | $-C_nH_{2n}-$ | -...**n**... | $-C_nH_{2n}-$ |
| -...**M**...- | -CFH- | -...**M**... | -CFH- |
| -...**D**...- | $-CF_2-$ | -...**D**... | $-CF_2-$ |
| -...**V**...- | -CH=CH- | -...**V**... | -CH=CH- |
| -...**Z**...- | -CO-O- | -...**Z**... | -CO-O- |
| -...**ZI**...- | -O-CO- | -...**ZI** ... | -O-CO- |
| -...**K**...- | -CO- | -...**K**... | -CO- |
| -...**W**...- | -CF=CF- | -...**W**... | -CF=CF- |

in which n and m are each integers, and the three dots "..." are place-holders for other abbreviations from this table.

Besides the compounds of the formula IA, II and III, the mixtures according to the invention preferably comprise one or more compounds of the compounds mentioned below.

The following abbreviations are used:

(n, m and z are, independently of one another, each an integer, preferably 1 to 6)

**Table D**

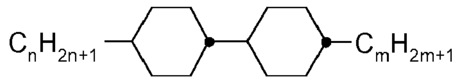

**CC-n-m**

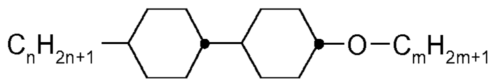

**CC-n-Om**

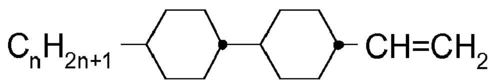

**CC-n-V**

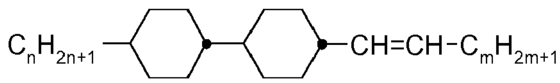

**CC-n-Vm**

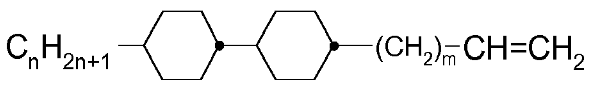

**CC-n-mV**

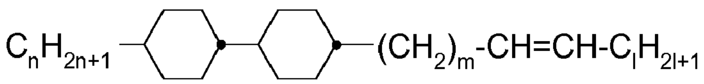

**CC-n-mVl**

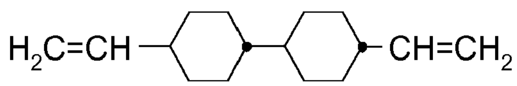

**CC-V-V**

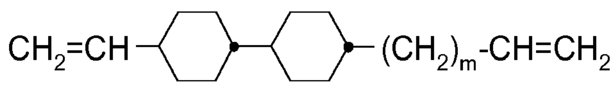

**CC-V-mV**

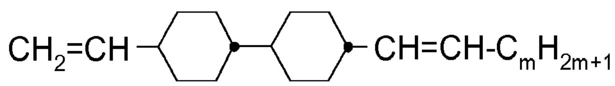

**CC-V-Vm**

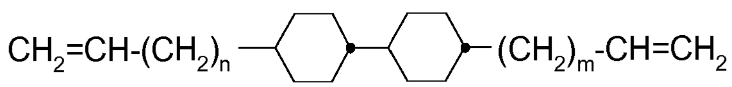

**CC-Vn-mV**

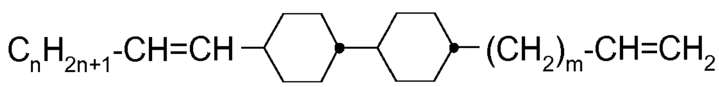

**CC-nV-mV**

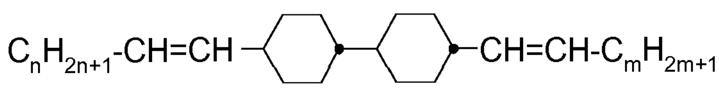

**CC-nV-Vm**

(continued)

**Table D**

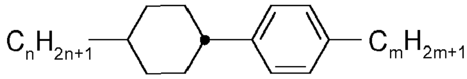

**CP-n-m**

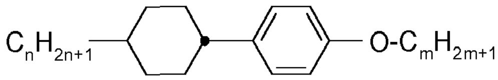

**CP-n-Om**

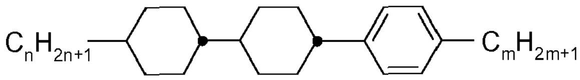

**CCP-n-m**

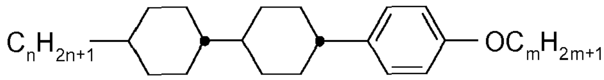

**CCP-n-Om**

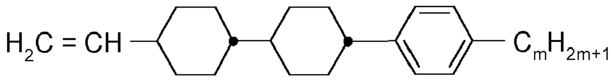

**CCP-V-m**

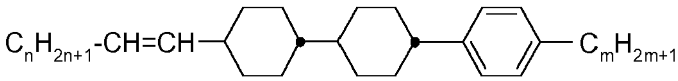

**CCP-nV-m**

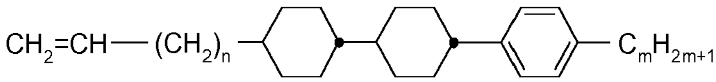

**CCP-Vn-m**

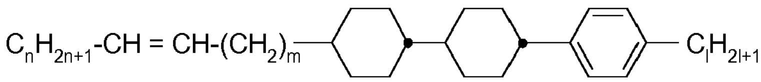

**CCP-nVm-l**

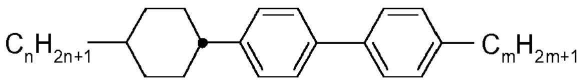

**CPP-n-m**

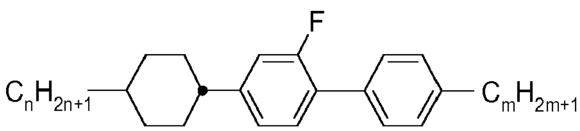

**CGP-n-m**

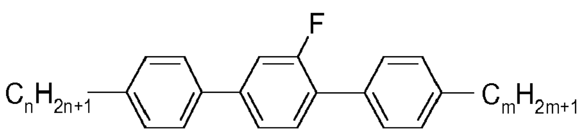

**PGP-n-m**

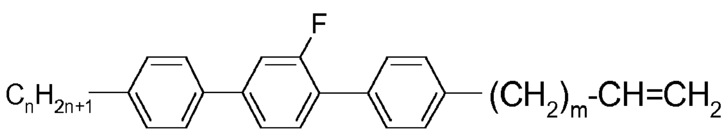

**PGP-n-mV**

(continued)

**Table D**

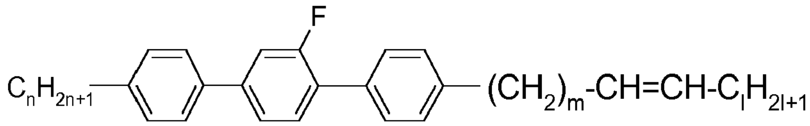

**PGP-n-mVI**

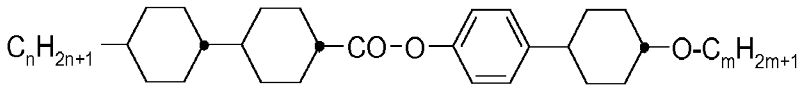

**CCZPC-n-m**

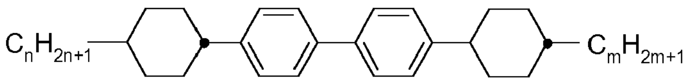

**CPPC-n-m**

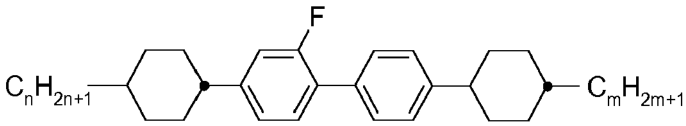

**CGPC-n-m**

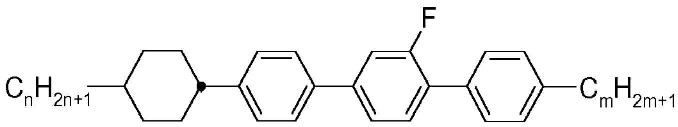

**CPGP-n-m**

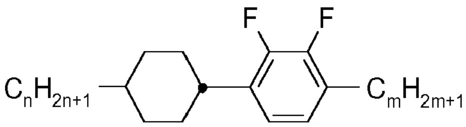

**CY-n-m**

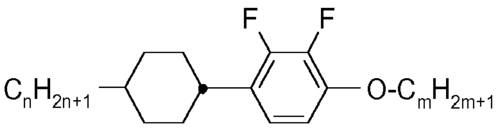

**CY-n-Om**

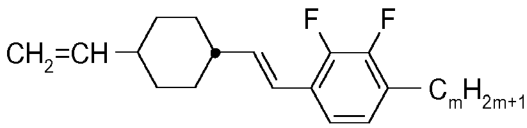

**CVY-n-m**

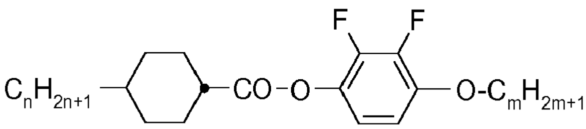

**CZY-n-Om**

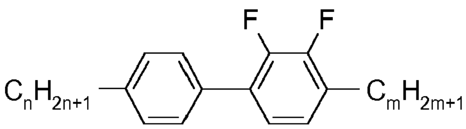

**PY-n-m**

(continued)

**Table D**

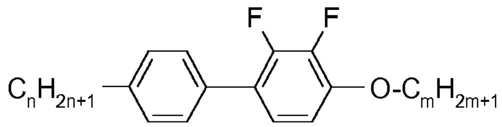

**PY-n-Om**

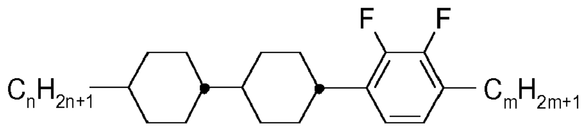

**CCY-n-m**

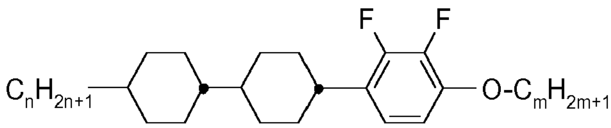

**CCY-n-Om**

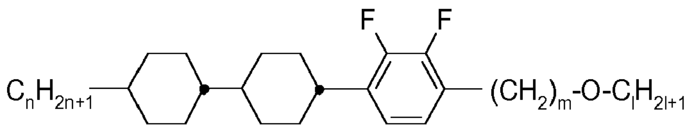

**CCY-n-mOl**

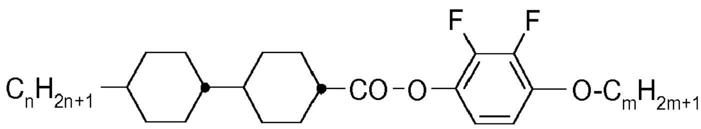

**CCZY-n-Om**

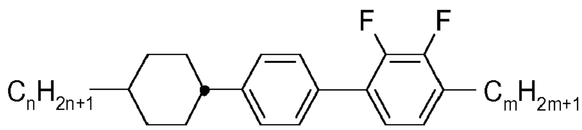

**CPY-n-m**

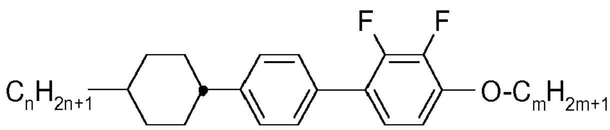

**CPY-n-Om**

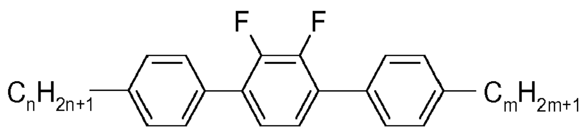

**PYP-n-m**

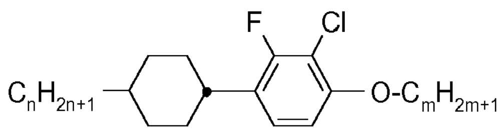

**CP(F,Cl)-n-Om**

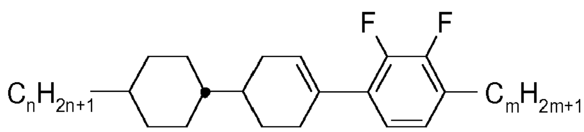

(continued)

Table D

CLY-n-m

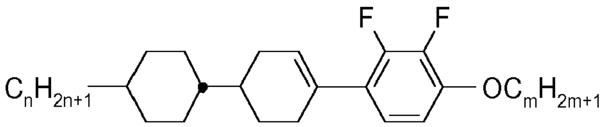

CLY-n-Om

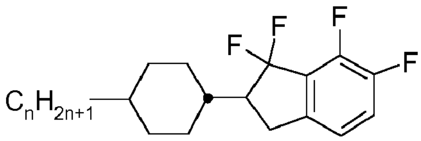

CK-n-F

Table E shows chiral dopants which are preferably employed in the mixtures according to the invention.

Table E

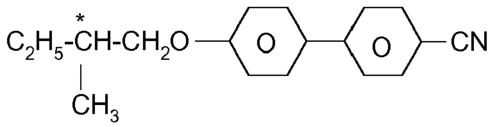

C 15

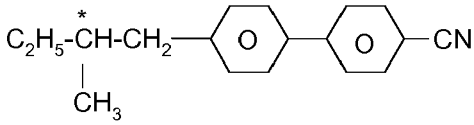

CB 15

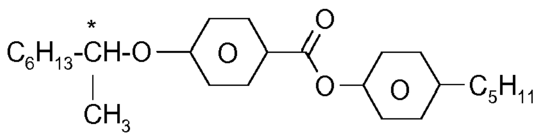

CM 21

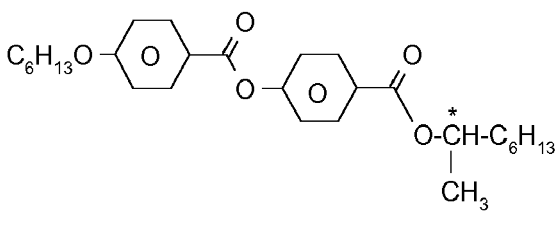

R S-811/S-811

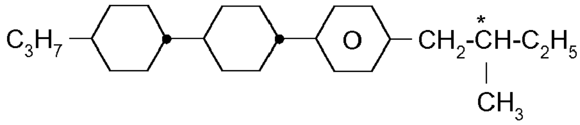

CM 44

(continued)

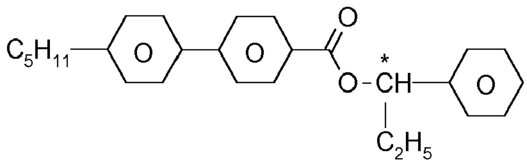

CM 45

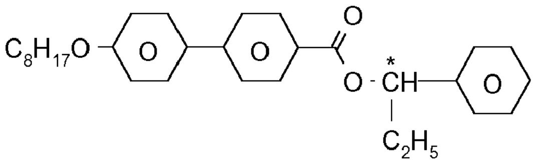

CM 47

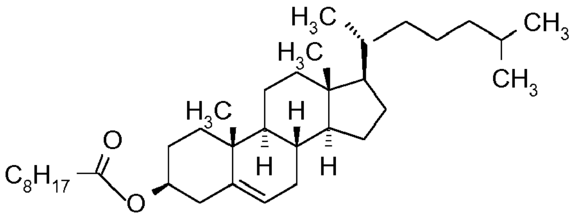

CN

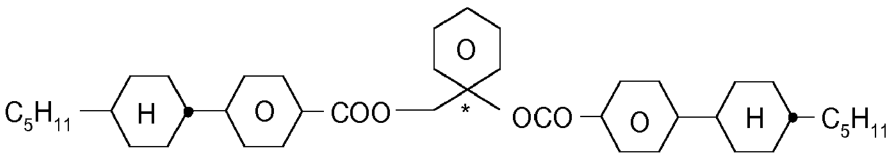

R-1011 / S-1011

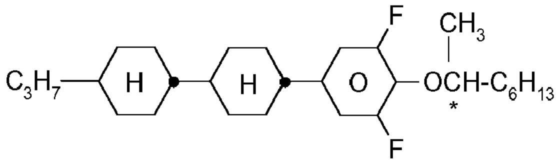

R-2011 / S-2011

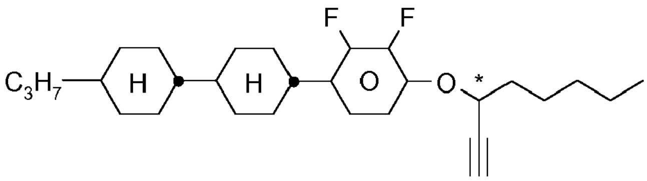

R-3011 / S-3011

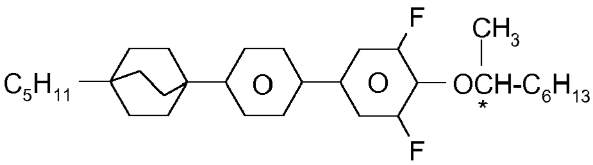

R-4011 / S-4011

(continued)

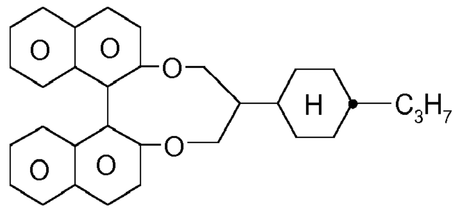

**R-5011 / S-5011**

In a preferred embodiment of the present invention, the media according to the invention comprise one or more compounds selected from the group of the compounds from Table E.

Table F shows stabilisers which can preferably be employed in the mixtures according to the invention in addition to the compounds of the formulae IA and IB. The parameter n here denotes an integer in the range from 1 to 12. In particular, the phenol derivatives shown can be employed as additional stabilisers since they act as antioxidants.

## Table F

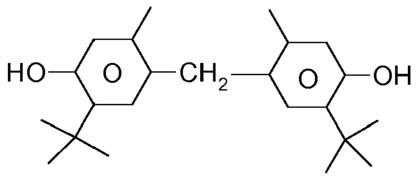

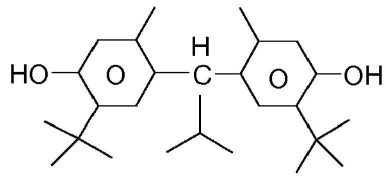

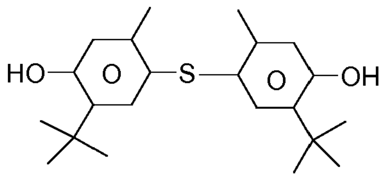

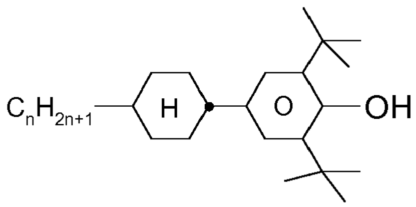

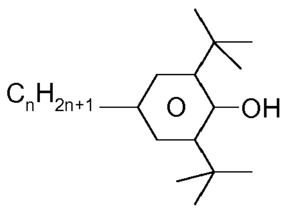

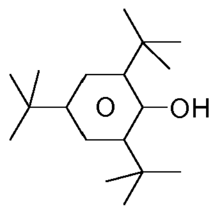

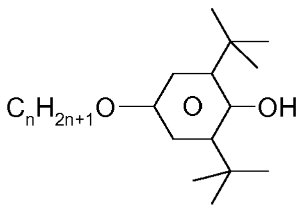

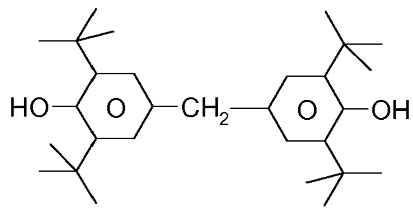

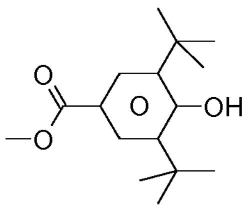

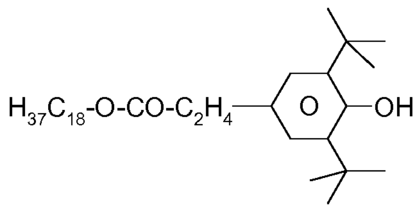

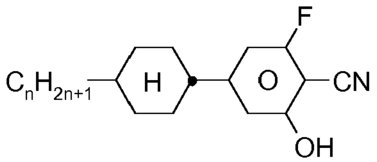

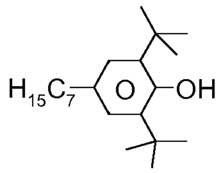

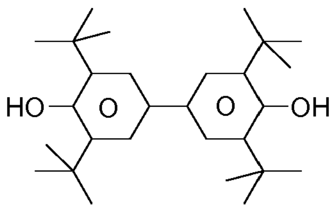

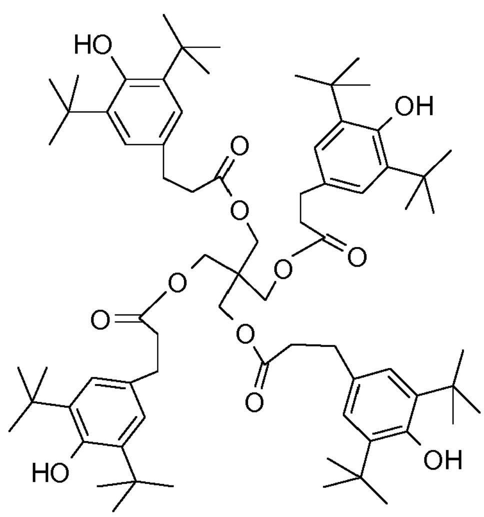

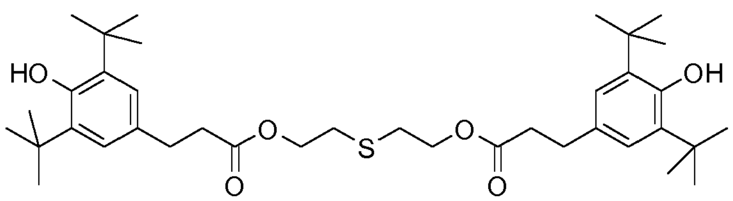

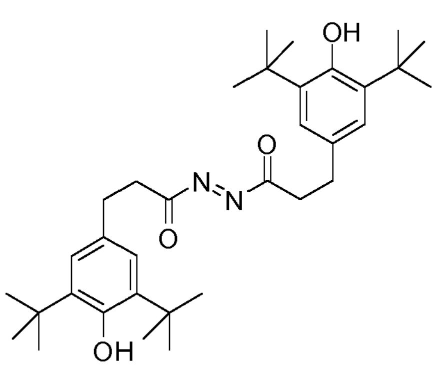

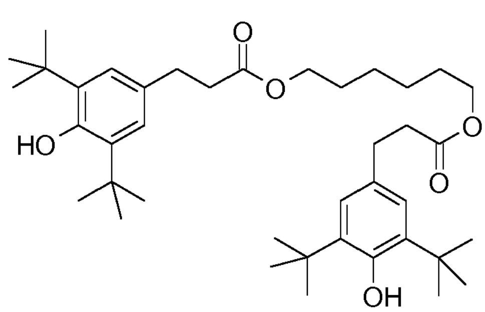

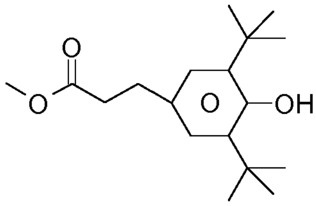

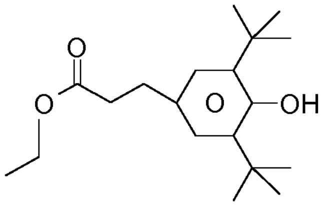

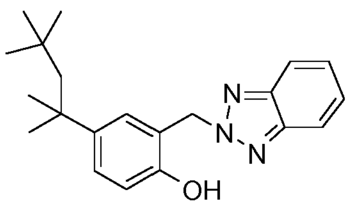

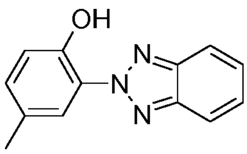

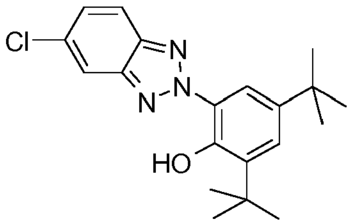

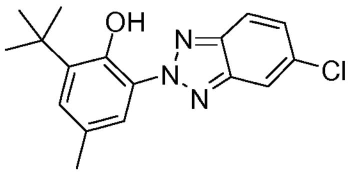

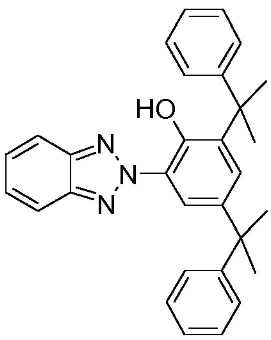

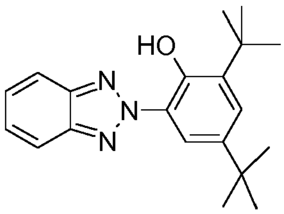

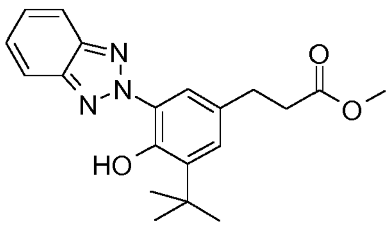

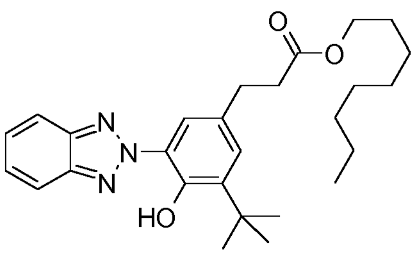

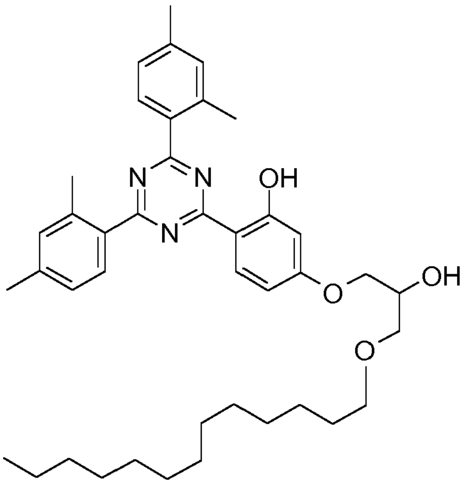

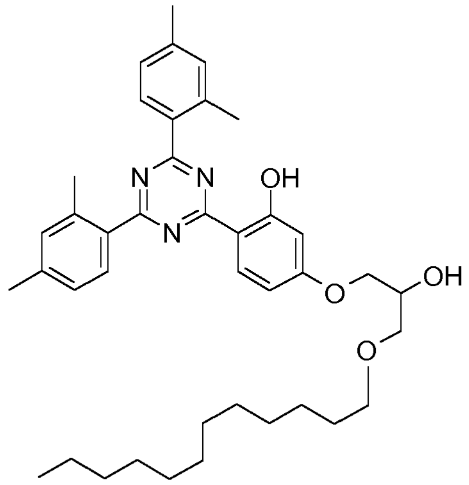

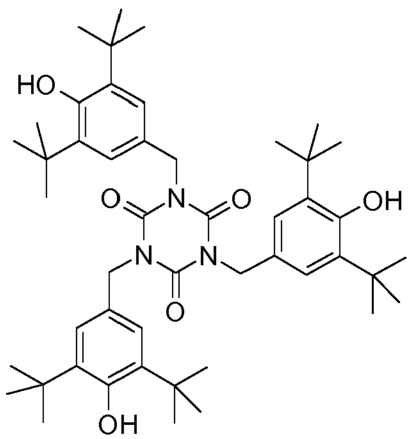

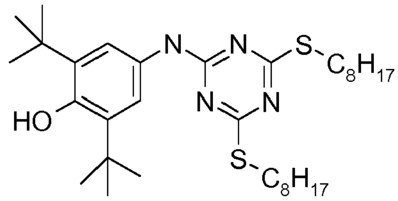

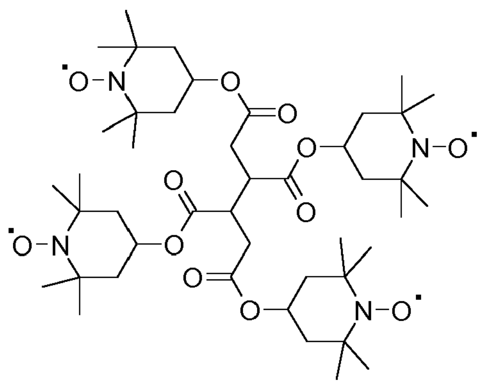

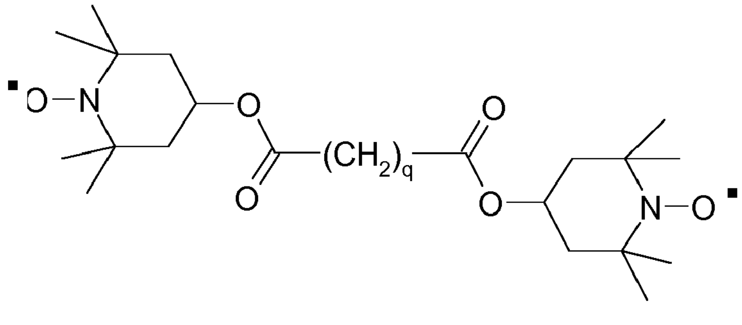

wherein q = 0, 1, 2, 3, 4, 5, 6, 7, 8, 9, 10

Examples

The following examples explain the present invention without restricting it in any way. However, the physical properties make it clear to the person skilled in the art what properties can be achieved and in what ranges they can be modified. In particular, the combination of the various properties which can preferably be achieved is thus well defined for the person skilled in the art.

The nematic host mixture N1 is prepared as follows:

Host Mixture N1

| | | | |
|---|---|---|---|
| CCY-3-O1 | 7.0 % | $T_{(N,I)}$ [°C]: | 85.0 |
| CCY-3-O2 | 4.0 % | $\Delta n$ | 0.1047 |
| CLY-3-O1 | 8.0 % | $n_e$ | 1.5876 |
| CPY-2-O2 | 10.0 % | $\Delta\varepsilon$: | -3.4 |
| CPY-3-O2 | 10.0 % | $\varepsilon_{\|\|}$ : | 3.5 |
| PYP-2-3 | 6.0 % | $\gamma_1$ [mPa·s]: | 112 |
| CC-3-V | 30.0 % | $K_1$ [pN] | 14.3 |
| CC-3-V1 | 9.0 % | $K_3$ [pN] | 17.5 |
| CY-3-O2 | 12.0 % | | |
| CY-5-O2 | 4.0 % | | |

Using the following stabilisers ST, IA-1 c, IB-1a-1 and IB-1 b-1

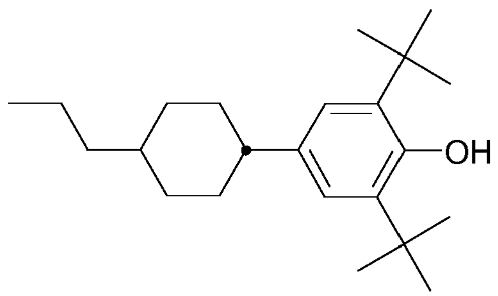

ST

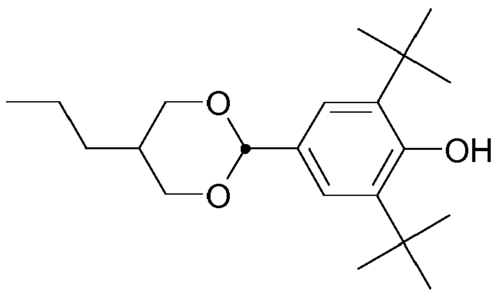

IA-1c

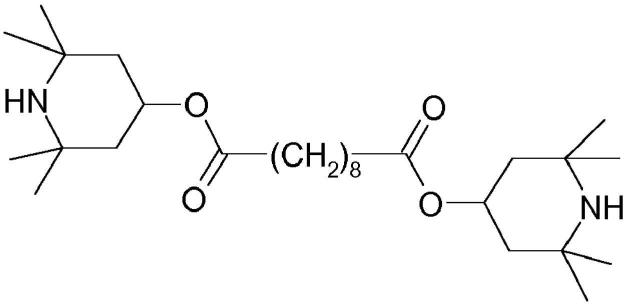

IB-1a-1

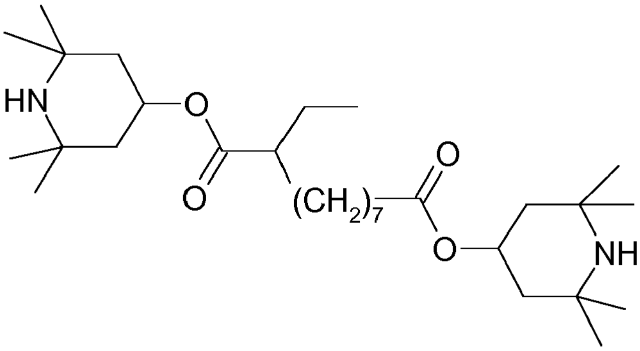

IB-1b-1

The comparative mixture C1 and the mixture examples M1 to M7 are prepared as follows:

| Mixture | concentration of component [%] | | | | |
|---|---|---|---|---|---|
| | N1 | ST | IA-1a | IB-1a | IB-2a |
| C1 | 99.97 | 0.03 | | - | - |
| M1 | 99.95 | - | 0.05 | - | - |
| M2 | 99.92 | 0.03 | 0.05 | - | - |
| M3 | 99.85 | - | 0.05 | 0.1 | - |
| M4 | 99.85 | - | 0.05 | - | 0.1 |

The mixtures C1 and M1 to M4 are exposed to thermal or UV stress and their VHR and conductivities are measured following the procedures described above.

The results are summarised in tables 1 to 3.

Table 1: VHR after heat load (measured at 60 Hz, 100 °C)

| Mixture | time [h] | VHR |
|---|---|---|
| C1 | 0 | 72.1 |
| | 48 | 61.3 |
| | 120 | 59.1 |
| M1 | 0 | 72.7 |
| | 48 | 63.7 |
| | 120 | 64.3 |
| M2 | 0 | 71.6 |
| | 48 | 60.4 |
| | 120 | 59.9 |

(continued)

| Mixture | time [h] | VHR |
|---|---|---|
| M3 | 0 | 86.8 |
| | 48 | 94.1 |
| | 120 | 93.8 |
| M4 | 0 | 87.4 |
| | 48 | 93.0 |
| | 120 | 93.6 |

Table 2: VHR after UV load (measured at 3 Hz, 60°C)

| | VHR of mixture [%] | | | | |
|---|---|---|---|---|---|
| | C1 | M1 | M2 | M3 | M4 |
| initial | 79.7 | 78.3 | 76.8 | 91.4 | 90.1 |
| after UV load | 75.3 | 75.6 | 74.4 | 92.2 | 90.7 |

Table 3: Resistivity after UV load (measured at ±10V,1Hz, 60°C)

| | Resistivity of mixture [GΩ] | | | | |
|---|---|---|---|---|---|
| | C1 | M1 | M2 | M3 | M4 |
| initial | 2.65 | 2.03 | 2.01 | 1.26 | 1.06 |
| after UV load | 2.71 | 2.14 | 2.20 | 1.43 | 1.15 |

As can be seen from table 1, replacement of the stabiliser ST from the state of the art in comparative mixture C1 by the stabiliser IA-1a-1 (mixture M1) or the use of a combination of the stabilisers IA-1 a-1 and ST (mixture M2) result in a very similar or slightly improved VHR after heat load. Likewise, the VHR before and after UV load of the mixtures M1 and M2 is on a similarly high level as the comparative mixture C1 (table 2).

The mixtures M1 and M2 show a significantly lower resistivity before and after UV load (table 3) compared to comparative mixture C1.

Unexpectedly, the VHR both after heat load (table 1) and after UV load (table 2) of the mixture M1 is significantly improved by the addition of a stabiliser of formula IB-1 a-1 (mixture M3) or IB-1b-1 (mixture M4). Surprisingly, also the resistivity both before and after UV load is significantly lower (table 3) compared to mixture C1 and even to M1, resulting in a reduction of more than 50% of the resistivity value of mixtures M3 and M4 in comparison to comparative mixture C1.

It is understood that although the resistivity of the mixtures M1 to M4, in particula M3 and M4, is lower than the resisitvity of mixture C1, all resistivity values are still on an extremely high level and the mixtures are very well suitable for practical use, e.g. in LC displays.

The results show that the stabiliser of formula IA has a beneficial effect for the reliability of the host mixture N1 either used alone or in combination with a stabilisers of formula IB.

Further, it can be shown that all mixtures show very high long term reliability in panel tests. In addition, very low or no image sticking is observed in panel tests using media according to the invention.

Without wishing to be bound by theory, and although this has not yet been fully evaluated, it is assumed that the combination of

1) a VHR value that is on a similar high level or higher than the VHR of a corresponding medium without a stabiliser accordingto the invention, with
2) a resistivity value that is lower than the resistivity value of a corresponding medium without a stabiliser accordingto the invention, leads to an improvement (lower degree) of image sticking or even to the total absence of image sticking.

## Claims

**1.** Liquid-crystalline medium, **characterised in that** it comprises

a) one or more compounds of the formula IA,

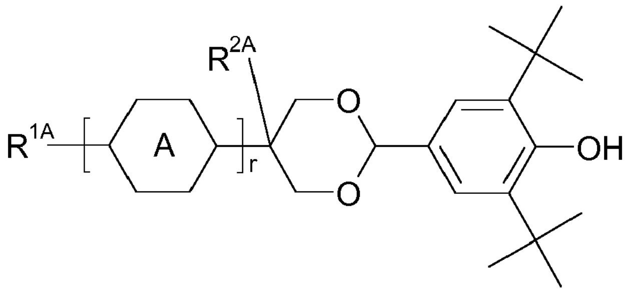

IA

in which

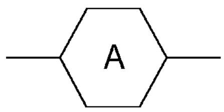

denotes

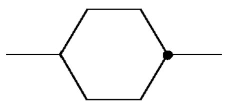

,

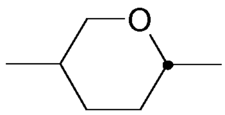

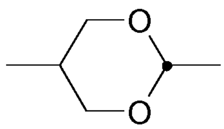

or

$R^{1A}$ denotes H, an alkyl, alkenyl or alkoxy radical having up to 15 C atoms, in which one or more H atoms may be replaced by halogen,

$R^{2A}$ denotes H, alkyl or alkenyl or alkoxy having up to 7 C atoms, in which one or more H atoms may be replaced by halogen,

r is 0 or 1;

and

b) one or more compounds of the formula II

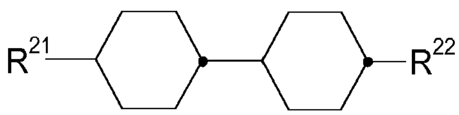

II

in which

$R^{21}$ denotes an unsubstituted alkyl radical having 1 to 7 C atoms or an unsubstituted alkenyl radical having 2 to 7 C atoms, and

$R^{22}$ denotes an unsubstituted alkenyl radical having 2 to 7 C atoms,

and

c) one or more compounds selected from the group of the compounds of the formulae III-1 to III-4,

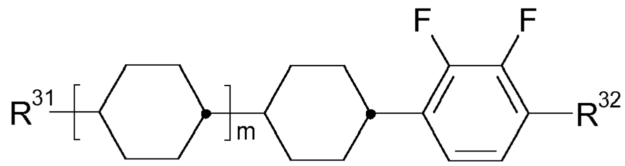

III-1

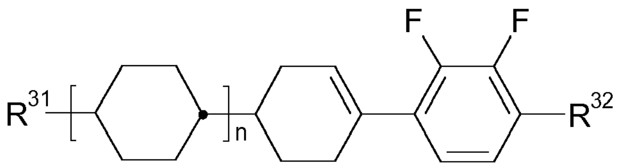

III-2

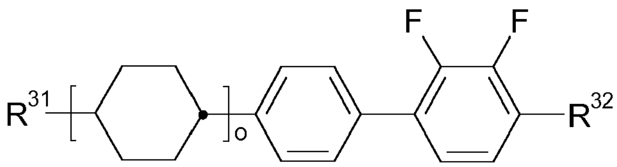

III-3

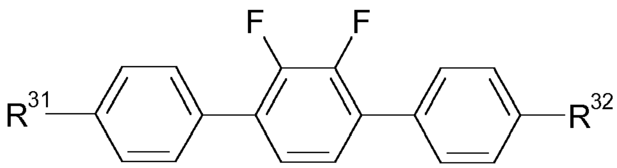

III-4

in which

$R^{31}$ denotes an unsubstituted alkyl radical having 1 to 7 C atoms,
$R^{32}$ denotes an unsubstituted alkyl radical having 1 to 7 C atoms or an unsubstituted alkoxy radical having 1 to 6 C atoms, and
m, n and o each, independently of one another, denote 0 or 1.

2. Medium according to claim 1, wherein the one or more compounds of formula IA are selected from the group of compounds of the formulae IA-1 to IA-2

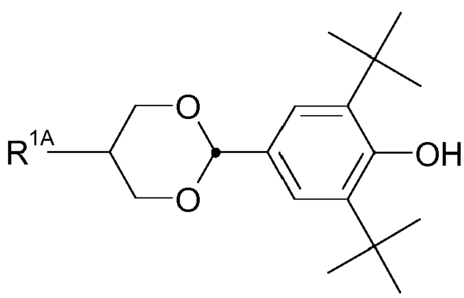

IA-1

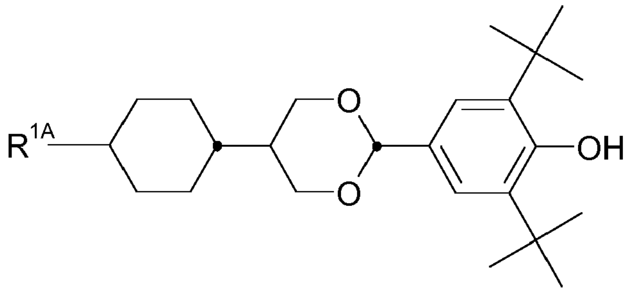

IA-2

in which

$R^{1A}$ denotes alkyl having 1 to 7 C atoms.

3. Medium according to claim 1 or 2, wherein the medium additionally comprises one or more compounds of the formula IB

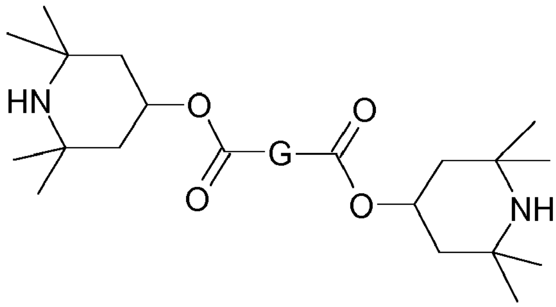

IB

in which

G denotes a divalent aliphatic or cycloaliphatic radical having 1 to 20 C atoms.

4. Medium according to claim 3, wherein the one or more compounds of formula IB are selected from the compounds of the formula IB-1

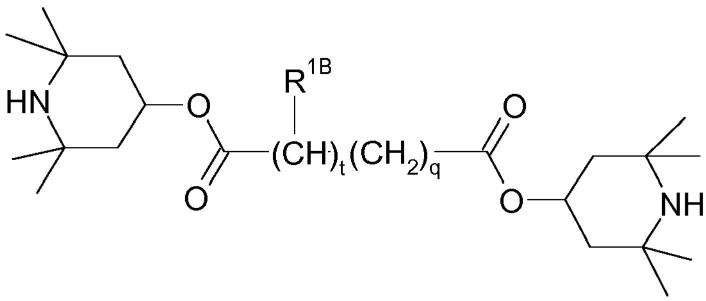

IB-1

wherein

$R^{1B}$ denotes H or alkyl having 1 to 6 C atoms,
t is 0 or 1, and
q is 0, 1, 2, 3, 4, 5, 6, 7, 8, or 9.

5. Medium according to one or more of claims 2 to 4, **characterised in that** it comprises one or more compounds of formula IA-1

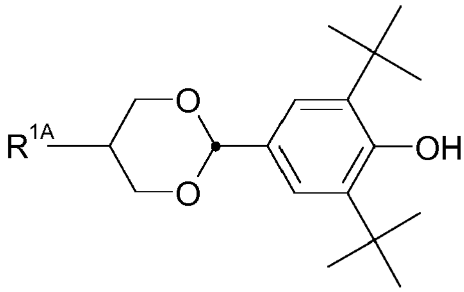

IA-1

wherein $R^{1A}$ denotes methyl, ethyl, n-propyl, n-butyl or n-pentyl,
and
one or more compounds of formula IB-1

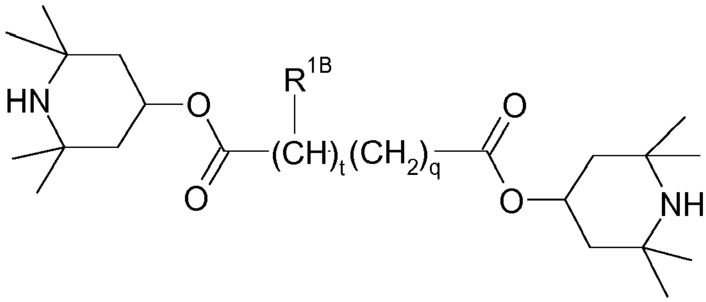

IB-1

wherein

$R^{1B}$ denotes ethyl
t is 1, and
q is 0, 1, 2, 3, 4, 5, 6, 7, 8, or 9.

6. Medium according to one or more of claims 1 to 5, wherein the total concentration of the compounds of the formula IA in the medium is in the range of from 1 ppm to 2000 ppm.

7. Medium according to one or more of claims 2 to 5, wherein the total concentration of the compounds of the formula IB in the medium is in the range of from 10 ppm to 3000 ppm.

8. Medium according to one or more of claims 1 to 7, **characterised in that** it comprises a compound of the formula II, as indicated in claim 1, in which $R^{21}$ denotes *n*-propyl and $R^{22}$ denotes vinyl.

9. Medium according to one or more of claims 1 to 8, wherein the total concentration of the compounds of the formula II in the medium as a whole is in the range of from 20 % to 60 %.

10. Medium according to one or more of Claims 1 to 9, **characterised in that** it comprises one or more compounds of the formula III-2-2

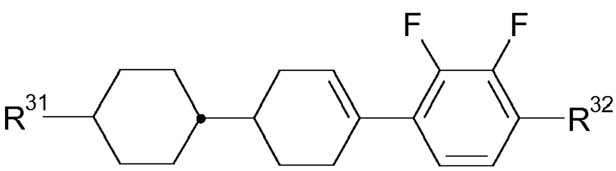

III-2-2

in which $R^{31}$ and $R^{32}$ have the respective meanings indicated in claim 1.

11. Electro-optical display or electro-optical component, **characterised in that** it contains a liquid-crystalline medium according to one or more of claims 1 to 10.

**12.** Display according to claim 11, wherein the display is an IPS or FFS display.

**13.** Display according to claim 11 or 12, wherein the display contains an active-matrix addressing device.

**14.** Use of a medium according to one or more of Claims 1 to 10 in an electro-optical display or in an electro-optical component.

**15.** Process for the preparation of a liquid-crystalline medium according to one or more of Claims 1 to 10, **characterised in that** one or more compounds of the formula IA and optionally one or more compounds of the formula IB are mixed with one or more compounds of the formula II and/or one or more compounds selected from the group of the compounds of the formulae III-1 to III-4 and/or one or more compounds of the formula IV.

Europäisches Patentamt
European Patent Office
Office européen des brevets

# EUROPEAN SEARCH REPORT

Application Number
EP 17 16 1354

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2016/146245 A1 (MERCK PATENT GMBH [DE]) 22 September 2016 (2016-09-22)<br>* examples 26,33,79,193,194,202,204-206,209-219,285-285,362; compounds ST-3b-1 *<br>* pages 80-82; compounds *<br>* page 141; compounds ST-3b-1 *<br>* claims *<br>----- | 1-15 | INV.<br>C09K19/04<br>C09K19/34<br>C09K19/30<br>C09K19/12 |
| X | US 2016/053178 A1 (HIRSCHMANN HARALD [DE] ET AL) 25 February 2016 (2016-02-25)<br>* claims; example M19 *<br>----- | 1-15 | |
| X | US 2013/248763 A1 (GOEBEL MARK [DE] ET AL) 26 September 2013 (2013-09-26)<br>* paragraph [0205]; compound 2nd *<br>* claims; examples *<br>----- | 1-15 | |
| X | US 2013/258268 A1 (GOEBEL MARK [DE] ET AL) 3 October 2013 (2013-10-03)<br>* claims; examples; compounds OH-2 *<br>----- | 1-15 | TECHNICAL FIELDS SEARCHED (IPC) |
| X | WO 2012/079710 A1 (MERCK PATENT GMBH [DE]; MANABE ATSUTAKA [DE]; FISCHER MILA [DE]; MONTE) 21 June 2012 (2012-06-21)<br>* claims; examples; compounds ST-1, ST-2 *<br>----- | 1-15 | C09K |

The present search report has been drawn up for all claims

1

| Place of search | Date of completion of the search | Examiner |
|---|---|---|
| The Hague | 1 September 2017 | Serbetsoglou, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 17 16 1354

This annex lists the patent family members relating to the patent documents cited in the above-mentioned European search report. The members are as contained in the European Patent Office EDP file on
The European Patent Office is in no way liable for these particulars which are merely given for the purpose of information.

01-09-2017

| Patent document cited in search report | Publication date | Patent family member(s) | Publication date |
|---|---|---|---|
| WO 2016146245 A1 | 22-09-2016 | TW 201700718 A | 01-01-2017 |
| | | WO 2016146245 A1 | 22-09-2016 |
| US 2016053178 A1 | 25-02-2016 | CN 105385453 A | 09-03-2016 |
| | | DE 102015009924 A1 | 25-02-2016 |
| | | EP 2990460 A1 | 02-03-2016 |
| | | JP 2016047918 A | 07-04-2016 |
| | | KR 20160023607 A | 03-03-2016 |
| | | TW 201614047 A | 16-04-2016 |
| | | US 2016053178 A1 | 25-02-2016 |
| US 2013248763 A1 | 26-09-2013 | CN 103391985 A | 13-11-2013 |
| | | DE 102011117937 A1 | 14-06-2012 |
| | | EP 2649154 A1 | 16-10-2013 |
| | | EP 3133137 A1 | 22-02-2017 |
| | | JP 2014505746 A | 06-03-2014 |
| | | KR 20140004119 A | 10-01-2014 |
| | | TW 201231629 A | 01-08-2012 |
| | | US 2013248763 A1 | 26-09-2013 |
| | | WO 2012076105 A1 | 14-06-2012 |
| US 2013258268 A1 | 03-10-2013 | CN 103249809 A | 14-08-2013 |
| | | EP 2649153 A1 | 16-10-2013 |
| | | JP 5784746 B2 | 24-09-2015 |
| | | JP 2014505745 A | 06-03-2014 |
| | | KR 20140032964 A | 17-03-2014 |
| | | TW 201229217 A | 16-07-2012 |
| | | US 2013258268 A1 | 03-10-2013 |
| | | WO 2012076104 A1 | 14-06-2012 |
| WO 2012079710 A1 | 21-06-2012 | DE 102011120112 A1 | 21-06-2012 |
| | | EP 2652088 A1 | 23-10-2013 |
| | | TW 201231626 A | 01-08-2012 |
| | | WO 2012079710 A1 | 21-06-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2514800 B1
- WO 2009129911 A1
- DE 19539141 A1
- WO 2016146245 A1
- EP 0240379 A


### Non-patent literature cited in the description


- **S.H. JUNG et al.** *Jpn. J. Appl. Phys.,* 2004, vol. 43 (3), 1028
- **S.H. LEE et al.** *Appl. Phys. Lett.,* 1998, vol. 73 (20), 2882-2883
- **S.H. LEE et al.** *Liquid Crystals,* 2012, vol. 39 (9), 1141-1148
- Merck Liquid Crystals, Physical Properties of Liquid Crystals. Merck KGaA, November 1997